(19) Europäisches Patentamt
European Patent Office
Office européen des brevets

(11) EP 2 305 369 A1

(12) EUROPEAN PATENT APPLICATION

(43) Date of publication:
**06.04.2011 Bulletin 2011/14**

(21) Application number: **10183606.2**

(22) Date of filing: **30.09.2010**

(51) Int Cl.:
***B01D 69/12** (2006.01)*
***B01D 71/36** (2006.01)*
***B01D 67/00** (2006.01)*

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.09.2009 JP 2009227141**

(71) Applicant: **Fujifilm Corporation**
**Minato-ku**
**Tokyo 106-8620 (JP)**

(72) Inventors:
- **Ishizuka, Kenichi**
  **Kanagawa (JP)**
- **Nishita, Nobuhiro**
  **Kanagawa (JP)**

(74) Representative: **HOFFMANN EITLE**
**Patent- und Rechtsanwälte**
**Arabellastraße 4**
**81925 München (DE)**

(54) **Crystalline polymer microporous membrane, method for producing the same, and filtration filter**

(57) To provide a crystalline polymer microporous membrane, which contains a crystalline polymer microporous film containing a crystalline polymer; and a fluorosurfactant covering at least part of the exposed surface of the crystalline polymer microporous film, wherein the crystalline polymer microporous membrane has a plurality of pores, where the average pore diameter of a first surface of the crystalline polymer microporous membrane is larger than that of a second surface thereof, and the average pore diameter of the crystalline polymer microporous membrane continuously changes from the first surface thereof to the second surface thereof.

EP 2 305 369 A1

## Description

### BACKGROUND OF THE INVENTION

#### Field of the Invention

The present invention relates to a crystalline polymer microporous membrane which has high filtration efficiency and is used for precise filtration of gases, liquids and the like, to a method for producing the crystalline polymer microporous membrane, and to a filtration filter using such crystalline polymer microporous membrane.

#### Description of the Related Art

Microporous membranes have long since been known and widely used for filtration filters, etc. As such microporous membranes, there are, for example, a microporous membrane using cellulose ester as a material thereof (see US Patent No. 1,421,341), a microporous membrane using aliphatic polyamide as a material thereof (see US Patent No. 2,783,894), a microporous membrane using polyfluorocarbon as a material thereof (see US Patent No. 4,196,070), a microporous membrane using polypropylene as a material thereof (see West German Patent No. 3,003,400), and the like.

These microporous membranes are used for filtration and sterilization of washing water for use in the electronics industries, water for medical use, water for pharmaceutical production processes and water for use in the food industry. In recent years, the applications of and amount for using microporous membranes have increased, and microporous membranes have attracted great attention because of their high reliability in trapping particles. Among these, microporous membranes made of crystalline polymers are superior in chemical resistance, and in particular, microporous membranes produced by using polytetrafluoroethylene (PTEF) as a raw material are superior in both heat resistance and chemical resistance. Therefore, demands for such microporous membranes have been rapidly growing.

Generally speaking, microporous membranes have a low filtration flow rate (i.e., a short lifetime) per unit area. In the case where the microporous membranes are used for industrial purposes, it is necessary to align many filtering units to increase the membrane areas. For this reason, a reduction in the cost for the filtering process is appreciated, and thus an extension of the filtering lifetime is desired. To this end, there are various proposals for a microporous membrane effective for preventing or slowing down reductions in flow rate due to clogging, such as an asymmetric membrane in which pore diameters are gradually reduced from the inlet side to the outlet side.

Moreover, another proposal is a microporous membrane of a crystalline polymer, which has a larger average pore diameter on a surface of the film than that on the back surface thereof, and has the pores whose average diameter continuously changes from the surface to the back surface (see Japanese Patent Application Laid-Open (JP-A) No. 2007-332342). According to this proposal, fine particles are efficiently captured by the filter and the lifetime of the filter is improved, by performing filtration using, as the inlet side, the plane (i.e. the surface) having the larger average pore diameter.

Moreover, as a hydrophilization method of a crystalline polymer microporous membrane, for example, it is proposed in JP-A No, 2009-119412 that an exposed surface of a crystalline polymer microporous film having an asymmetric pore structure is subjected to a hydrophilication treatment by impregnating in a solution of hydrogen peroxide or water soluble solvent, applying laser beam, or chemically etching.

However, in the case of the crystalline polymer microporous membrane having an asymmetric pore structure, the membrane has a heated surface, unheated surface, and an inner part in between these surfaces, and the polymerization degree of the crystalline polymer varies in each area. The aforementioned hydrophilization methods cannot uniformly hydrophilize the entire membrane of such structure, and a hydrophilization process needs to be performed on each area separately depending on the polymerization degree thereof so as to uniformly hydrophilize the entire membrane, and the requirement for these separate hydrophilization processes results in low efficiency of the production. Moreover, the membranes hydrophilized by these methods do not have sufficient hydrophilicity, and the filtration flow rate and lifetime thereof are also insufficient. In addition, the hydrophilization method by applying an ultraviolet laser beam and ArF laser beam has a problem such that the radiation of the ultraviolet laser beam and ArF laser beam may damage the membrane, and thus the strength of the membrane may be decreased.

Moreover, there has been proposed in JP-A No. 06-228359 a hydrophilic porous membrane in which a fluororesin porous membrane is impregnated with a nonionic fluorosurfactant, and the surfactant is crosslinked with at least one selected from the group consisting of an epoxy group-containing compound, isocyanurate, and polyfunctional oligomers.

However, there is no disclosure or suggestion in this patent literature about the application of a membrane having an asymmetric pore structure, and this proposal has a problem such that the filtration rate of the membrane and life time of the membrane as a filter had not been sufficiently improved.

Accordingly, there is currently a demand for a crystalline polymer microporous membrane having high water resistance, high acid resistance, high alkali resistance, high hydrophilicity, long lifetime as a filter, and excellent filtration flow rate, a method for producing a crystalline polymer microporous membrane, which can efficiently produce the aforementioned crystalline polymer microporous membrane, and to a filtration filter using the aforementioned crystalline polymer microporous membrane.

BRIEF SUMMARY OF THE INVENTION

The present invention aims at solving the aforementioned various problems in the art, and achieving the following object. An object of the present invention is to provide a crystalline polymer microporous membrane having high water resistance, high acid resistance, high alkali resistance, high hydrophilicity, long lifetime as a filter, and excellent filtration flow rate, to provide a method for producing a crystalline polymer microporous membrane, which can efficiently produce the aforementioned crystalline polymer microporous membrane, and to provide a filtration filter using the aforementioned crystalline polymer microporous membrane.

Means for solving the aforementioned problems are as follows:

<1> A crystalline polymer microporous membrane, containing:

a crystalline polymer microporous film containing a crystalline polymer; and
a fluorosurfactant covering at least part of the exposed surface of the crystalline polymer microporous film, wherein the crystalline polymer microporous membrane has a plurality of pores, where the average pore diameter of a first surface of the crystalline polymer microporous membrane is larger than that of a second surface thereof, and the average pore diameter of the crystalline polymer microporous membrane continuously changes from the first surface thereof to the second surface thereof.

<2> The crystalline polymer microporous membrane according to <1>, wherein the fluorosurfactant contains at least one functional group selected from the group consisting of a hydroxyl group, an amino group, and derivative groups thereof.
<3> The crystalline polymer microporous membrane according to <2>, wherein the fluorosurfactant contains the functional group as a substituent, and a rate of functional group substitution in a molecule of the fluorosurfactant is 15% to 90%.
<4> The crystalline polymer microporous membrane according to any one of <1> to <3>, further containing a first crosslinking agent, which assists the fluorosurfactant to crosslink.
<5> The crystalline polymer microporous membrane according to <4>, wherein the first crosslinking agent is a polyfunctional epoxy compound having two or more functional groups per molecule.
<6> The crystalline polymer microporous membrane according to any of <4> or <5>, further containing a second crosslinking agent, which assists the first crosslinking agent to crosslink.
<7> The crystalline polymer microporous membrane according to any one of <1> to <6>, wherein the crystalline polymer microporous membrane is obtained by heating a surface of a film formed of a crystalline polymer so as to form a semi-baked film with a temperature gradient in the thickness direction thereof, and drawing the semi-baked film.
<8> The crystalline polymer microporous membrane according to <7>, wherein the second surface of the crystalline polymer microporous membrane is the surface which has been subjected to heating.
<9> The crystalline polymer microporous membrane according to any one of <1> to <8>, wherein the crystalline polymer microporous membrane satisfies:

$(b_3'/d_4')/(d_3/d_4) > 1$, where $d_3$ and $d_4$ respectively denote the average pore diameter of a first surface of the crystalline polymer microporous film before at least part of the exposed surface thereof is covered with the fluorosurfactant, and the average pore diameter of a second surface of the crystalline polymer microporous film before being covered with the fluorosurfactant, $d_3'$ and $d_4'$ respectively denote the average pore diameter of the first surface of the crystalline polymer microporous membrane and the average pore diameter of the second surface of the crystalline polymer microporous membrane, $d_3/d_4$ expresses a ratio of $d_3$ to $d_4$, $d_3'/d_4'$ expresses a ratio of $d_3'$ to $d_4'$, and the first and second surfaces of the crystalline polymer microporous film correspond to the first and second surfaces of the crystalline polymer microporous membrane, respectively.

<10> The crystalline polymer microporous membrane according to any one of <1> to <9>, wherein the crystalline polymer is at least one selected from the group consisting of polytetrafluoroethylene, polyvinylidene fluoride, tetrafluoroethylene-perfluoroalkylvinyl ether copolymer, tetrafluoroethylene-hexafluoropropylene copolymer, tetraflrzoroethylene-ethylene copolymer, polychlorotrifluoroethylene, chlorotrifluoroethylene-ethylene copolymer,

polyethylene, polypropylene, nylon, polyacetal, polybutylene terephthalate, polyethylene terephthalate, syndiotactic polystyrene, polyphenylene sulfide, polyether-etherketone, wholly aromatic polyamide, wholly aromatic polyester, and polyethernitrile.

<11> The crystalline polymer microporous membrane according to any one of <1> to <10>, wherein the crystalline polymer is polytetrafluoroethylene.

<12> A method for producing a crystalline polymer microporous membrane, containing:

heating one surface of a film formed of a crystalline polymer so as to form a semi-baked film with a temperature gradient in the thickness direction thereof;
drawing the semi-baked film; and
applying a fluorosurfactant to an exposed surface of the drawn film so as to cover the exposed surface of the drawn film with the fluorosurfactant.

<13> The method for producing a crystalline polymer microporous membrane according to <12>, wherein the fluorosurfactant contains at least one functional group selected from the group consisting of a hydroxyl group, an amino group, and derivative groups thereof.

<14> The method for producing a crystalline polymer microporous membrane according to <13>, wherein the fluorosurfactant contains the functional group as a substituent, and a rate of functional group substitution in a molecule of the fluorosurfactant is 15% to 90%.

<15> The method for producing a crystalline polymer microporous membrane according to any one of <12> to <14>, wherein the applying further contains crosslinking the fluorosurfactant with assistance of a first crosslinking agent.

<16> The method for producing a crystalline polymer microporous membrane according to <15>, wherein the first crosslinking agent is a polyfunctional epoxy compound having two or more functional groups per molecule.

<17> The method for producing a crystalline polymer microporous membrane according to any of<15> or <16>, wherein the applying further contains crosslinking the first crosslinking agent with assistance of a second crosslinking agent.

<18> The method for producing a crystalline polymer microporous membrane according to any one of <12> to <17>, wherein the crystalline polymer is polytetrafluoroethylene.

<19> The method for producing a crystalline polymer microporous membrane according to any one of <12> to <18>, wherein the drawing is drawing the semi-baked film in a monoaxial direction.

<20> The method for producing a crystalline polymer microporous membrane according to any one of <12> to <19>, wherein the drawing is drawing the semi-baked film in a biaxial direction.

<21> A filtration filter containing the crystalline polymer microporous membrane as defined in any one of <1> to <12>.

<22> The filtration filter according to <21>, wherein the crystalline polymer microporous membrane has a pleated shape.

<23> The filtration filter according to any of <21> or <22>, wherein the first surface of the crystalline polymer microporous membrane is a filtering surface from which a fluid to be filtered is introduced.

The present invention solves the aforementioned various problems in the art, achieves the aforementioned object, and can provide: a crystalline polymer microporous membrane having high water resistance, high acid resistance, high alkali resistance, high hydrophilicity, long lifetime as a filter, and excellent filtration flow rate; a method for producing a crystalline polymer microporous membrane, which can efficiently produce the aforementioned crystalline polymer microporous membrane; and a filtration filter using the aforementioned crystalline polymer microporous membrane.

BRIEF DESCRIPTION OF THE DRAWINGS

FIG. 1 is a view illustrating the structure of an ordinary pleated filter element before mounted in a housing.

FIG. 2 is a view illustrating the structure of an ordinary filter element before mounted in a housing of a capsule-type filter cartridge

FIG. 3 is a view illustrating a structure of an ordinary capsule-type filter cartridge formed integrally with a housing.

FIG. 4A is a schematic view illustrating a cross-section of the crystalline polymer microporous film having a symmetric pore structure of Comparative Example 2, before being coated with a fluorosurfactant.

FIG. 4B is a schematic view illustrating a cross-section of the crystalline polymer microporous membrane having a symmetric pore structure of Comparative Example 2.

FIG. 5A is a schematic view illustrating a cross-section of the crystalline polymer microporous film having an asymmetric pore structure of Example 1, before being coated with a fluorosurfactant.

FIG. 5B is a schematic view illustrating a cross-section of the crystalline polymer microporous membrane having an asymmetric pore structure of Example 1.

DETAILED DESCRIPTION OF THE INVENTION

(Crystalline Polymer Microporous membrane and Method for Producing Crystalline Polymer Microporous membrane)

A crystalline polymer microporous membrane contains a crystalline polymer microporous film containing a crystalline polymer; and a fluorosurfactant covering at least part of the exposed surface of the crystalline polymer microporous film, wherein the crystalline polymer microporous membrane has a plurality of pores, where the average pore diameter of a first surface of the crystalline polymer microporous membrane is larger than that of a second surface thereof, and the average pore diameter continuously changes from the first surface of the crystalline polymer microporous membrane to the second surface of the crystalline polymer microporous membrane.

In the present invention, the crystalline polymer microporous film before at least part of the exposed surface thereof is covered with the fluorosurfactant is defined as and referred to as "a crystalline polymer microporous film," and the crystalline polymer microporous film after at least part of the exposed surface thereof is covered with the fluorosurfactant is defined as "a crystalline polymer microporous membrane" of the present invention. In addition, note that a first surface and second surface of the crystalline polymer microporous membrane are corresponded to a first and second surface of the crystalline polymer microporous film, respectively, and the crystalline polymer microporous film has a plurality of pores each corresponding to pores of the crystalline polymer microporous membrane.

A method for producing a crystalline polymer microporous membrane contains an asymmetric heating step, drawing step, and coating step, and may further contain a crystalline polymer film forming step and other steps, if necessary.

The crystalline polymer microporous membrane and the method for producing the same will be specifically explained hereinafter.

The crystalline polymer microporous membrane is obtained by heating one surface of a film formed of a crystalline polymer to form a semi-baked film with a temperature gradient in the thickness direction thereof, drawing the semi-baked film, and in the manner mentioned later, applying a fluorosurfactant to the drawn film so as to cover an exposed surface of the drawn film with the fluorosurfactant.

In this case, it is preferred that heating be performed from the side of "the second surface" having the smaller average pore diameter than that on "first surface." The pore is a continuous pore (i.e. a pore both ends of which are open) from the first surface to the second surface.

The "first surface" having the larger average pore diameter may be referred to as "unheated surface," and "the second surface" having the smaller average pore diameter may be referred to as "the heated surface" in the descriptions below for simplicity of explanation. However, semi-baking may be performed on either surface of an unbaked crystalline polymer film, and thus either surface thereof may become "the heated surface."

<Crystalline Polymer>

In the present specification, the term "crystalline polymer" means a polymer having a molecular structure in which crystalline regions containing regularly-aligned long-chain molecules are mixed with amorphous regions having not regularly aligned long-chain molecules. Such polymer exhibits crystallinity through a physical treatment. For example, if a polyethylene film is drawn by an external force, a phenomenon is observed in which the initially transparent film turns to the clouded film in white. This phenomenon is derived from the expression of crystallinity which is obtained when the molecular alignment in the polymer is aligned in one direction by the external force.

The crystalline polymer is suitably selected depending on the intended purpose without any restriction. Examples thereof include polyalkylenes, polyesters, polyamides, polyethers, and liquid crystalline polymers. Specific examples thereof include polytetrafluoroethylene, polyvinylidene fluoride, tetrafluoroethylene-perfluoroalkylvinyl ether copolymer, tetrafluoroethylene-hexafluoropropylene copolymer, tetrafluoroethylene-ethylene copolymer, polychlorotrifluoroethylene, chlorotrifluoroethylene-ethylene copolymer, polyethylene, polypropylene, nylon, polyacetal, polybutylene terephthalate, polyethylene terephthalate, syndiotactic polystyrene, polyphenylene sulfide, polyether-etherketone, wholly aromatic polyamide, wholly aromatic polyester, fluororesin, and polyethernitrile. These may be used independently or in combination.

Among them, polyalkylene (e.g. polyethylene and popypropylene) is preferable, fluoropolyalkylenes in which a hydrogen atom of the alkylene group in polyalkylene is partially or wholly substituted with a fluorine atom are more preferable, and polytetrafluoroethylenes (PTFE) are particularly preferable, as they have desirable chemical resistance and handling properties.

Polyethylenes vary in their densities depending on the branching degrees thereof and are classified into low-density polyethylenes (LDPE) that have high branching degrees and are low in crystallinity, and high-density polyethylenes (HDPE) that have low branching degrees and are high in crystallinity. Both LDPE and HDPE can be used. Among these, HDPE is particularly preferable in terms of the crystallinity control.

The crystalline polymer preferably has a glass transition temperature of 40°C to 400°C, more preferably 50°C to 350°C. The crystalline polymer preferably has a mass average molecular weight of 1,000 to 100,000,000. The crystalline polymer preferably has a number average molecular weight of 500 to 50,000,000, more preferably 1,000 to 10,000,000.

One of characteristics of the crystalline polymer microporous membrane is that the average pore diameter at the unheated surface (the first surface) of the membrane is larger than the average pore diameter at the heated surface (the second surface) of the membrane.

When the membrane is assumed to have a thickness of 10, an average pore diameter is P1 at a depth of 1 from the surface, an average pore diameter is P2 at a depth of 9 from the surface, and the ratio P1/P2 is preferably 2 to 10,000, more preferably 3 to 100.

In addition, the crystalline polymer microporous membrane has a ratio (an average pore diameter at the unheated surface/ an average pore diameter at the heated surface) of 5/1 to 30/1, more preferably 10/1 to 25/1, and even more preferably 15/1 to 20/1.

The average pore diameter of the unheated surface (first surface) of the crystalline polymer microporous membrane is suitably selected depending on the intended purpose without any restriction, but it is preferably 0.1 μm to 500 μm, more preferably 0.25 μm to 250 μm, and particularly more preferably 0.50 μm to 100 μm.

When the average pore diameter is smaller than 0.1 μm, the flow rate may be reduced. When the average pore diameter is larger than 500 μm, fine particles may not be efficiently captured. On the other hand, the average pore diameter within the above-described particularly preferable range is advantageous for the flow rate and capturing ability of fine particles.

The average pore diameter of the heated surface (second surface) of the crystalline polymer microporous membrane is suitably selected depending on the intended purpose without any restriction, but it is preferably 0.01 μm to 5.0 μm, more preferably 0.025 μm to 2.5 μm, and particularly more preferably 0.05 μm to 1.0 μm.

When the average pore diameter is smaller than 0.01 μm, the flow rate may be reduced. When the average pore diameter is larger than 5.0 μm, fine particles may not be efficiently captured. On the other hand, the average pore diameter within the above-described particularly preferable range is advantageous for the flow rate and capturing ability of fine particles.

The average pore diameter is, for example, measured as follows: a surface of the membrane is photographed (SEM photograph with a magnification of × 1,000 to × 5,000) using a scanning electron microscope (HITACHI S-4000, and HITACHI E1030 (for vapor deposition), both manufactured by Hitachi, Ltd.), the photograph is taken into an image processing apparatus (Name of main body: TV IMAGE PROCESSOR TVIP-4100II, manufactured by Nippon Avionics Co., Ltd., Name of control software: TV IMAGE PROCESSOR IMAGE COMMAND 4198, manufactured by Ratoc System Engineering Co., Ltd.) so as to obtain an image only including crystalline polymer fibers, a certain number of pores on the image were measured in terms of the diameter thereof, and the average pore diameter is calculated by arithmetically processing the measured pores.

The crystalline polymer microporous membrane of the present invention includes both an (first) aspect in which the average pore diameter continuously changes from the unheated surface (the first surface) thereof towards the heated surface (the second surface) thereof, and an (second) aspect in which the membrane has a single-layer structure. Addition of these aspects makes it possible to lengthen the filtration lifetime effectively.

The phrase "the average pore diameter continuously changes from the unheated surface thereof towards the heated surface thereof used in the first aspect means that when the distance (t) from the unheated surface in the thickness direction (which is equivalent to the depth from the first surface) is plotted on the horizontal axis on a graph, and the average pore diameter (D) is plotted on the vertical axis on the graph, the graph is represented by one continuous line. The graph concerning the area between the unheated surface (t = 0) and the heated surface (t = membrane thickness) may be composed only of regions where the inclination is negative (dD/dt < 0), or may be composed of regions where the inclination is negative and regions where the inclination is zero (dD/fdt = 0), or may be composed of regions where the inclination is negative and regions where the inclination is positive (dD/dt > 0). It is desirable that the graph be composed only of regions where the inclination is negative (dD/dt < 0), or composed of regions where the inclination is negative and regions where the inclination is zero (dD/dt = 0). It is particularly desirable that the graph be composed only of regions where the inclination is negative (dD/dt < 0).

The regions where the inclination is negative preferably include at least the unheated surface of the membrane. In the regions where the inclination is negative (dD/dt < 0), the inclination may be constant or vary. For instance, when the graph concerning the crystalline polymer microporous membrane of the present invention is composed only of regions where the inclination is negative (dD/dt < 0), it is possible to employ an aspect in which dD/dt at the heated surface of the membrane is greater than dD/dt at the unheated surface of the membrane. Also, it is possible to employ an aspect in which dD/dt gradually increases from the unheated surface of the membrane towards the heated surface of the

membrane (an aspect in which the absolute value thereof decreases).

The term "single-layer structure" used in the second aspect excludes multilayer structures which are each formed, for example, by sticking together or depositing two or more layers. In other words, the term "single-layer structure" used in the second aspect means a structure having no border between layers that exists in a multilayer structure. In the second aspect, it is preferred that the membrane have a plane, where the average pore diameter is smaller than that at the unheated surface and larger than that at the heated surface, inside the membrane.

The crystalline polymer microporous membrane of the present invention preferably includes both the characteristics of the first and second aspects. Specifically, the microporous membrane is preferably such that the average pore diameter at the unheated surface of the membrane is larger than the average pore diameter at the heated surface of the membrane, the average pore diameter continuously changes from the unheated surface towards the heated surface, and the membrane has a single-layer structure. Configuration in such a manner makes it possible for the microporous membrane to trap fine particles highly efficiently when a solution or the like is passed for filtration from the side of the surface with the larger average pore diameter, enables its filtration lifetime to lengthen greatly and can be produced easily at low cost.

A thickness of the crystalline polymer microporous membrane is preferably 1 μm to 300 μm, more preferably 5 μm to 100 μm, and even more preferably 10 μm to 80 μm.

At least part of the exposed surface of the crystalline polymer microporous film is covered with a fluorosurfactant (hydrophilization process) to form the crystalline polymer microporous membrane.

The term "exposed surface" used here includes the exposed surface of the crystalline polymer microporous film and surroundings of the pores, and inner portions of the pores.

<Fluorosurfactant>

The fluorosurfactant is suitably selected depending on the intended purpose without any restriction, provided that it does not adversely affect the obtainable effect of the present invention. Examples thereof include an anionic fluorosurfactant, a cationic fluorosurfactant, a nonionic fluorosurfactant, and betaine. These may be used independently, or in combination.

Among them, the nonionic fluorosurfactant is preferable as it can provide excellent hydrophilicity, acid resistance, and alkali resistance to the resulting crystalline polymer microporous membrane.

It is preferred that the fluorosurfactant contain at least one functional group selected from the group consisting of a hydroxyl group, an amino group, and a derivative group thereof. The embodiment that the fluorosurfactant contains the aforementioned functional groups at the terminals thereof is more preferable. By substituting groups contained in a molecule of the fluorosurfactant with the functional group (may be referred to as a hydrophilic group hereinafter), the fluorosurfactant is provided with hydrophilicity.

The hydrophilic group substitution rate in the molecule of the fluorosurfactant is suitably selected depending on the intended purpose without any restriction, but it is preferably 15% to 90%, more preferably 17.5% to 80%, and even more preferably 20% to 70%. When the substitution rate is less than 15%, the hydrophilization of the crystalline polymer microporous membrane may be insufficient. When the substitution rate is more than 90%, it may be difficult for the crystalline polymer microporous membrane to adsorb such fluorosurfactant thereon, and thus the desired coverage thereof may not be attained.

Moreover, it is more preferable that the fluorosurfactant includes no ester bonding in the molecule thereof, and has acid resistance, and alkali resistance.

Examples of such fluorosurfactant include the compound expressed by the following general formula 1, and the compound expressed by the following general formula 2. Among them, the compound expressed by the following general formula 1 is particularly preferable.

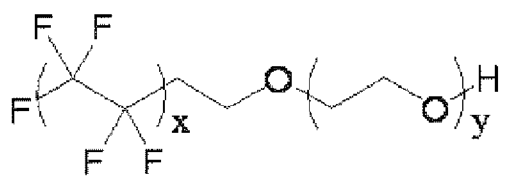

General Formula 1

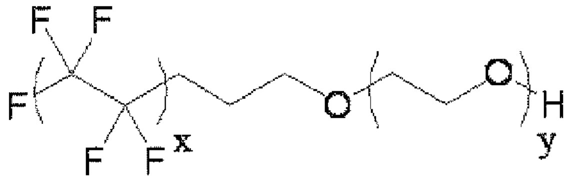

General Formula 2

In the general formulae 1 and 2 above, "x" is suitably selected depending on the rate of the hydrophilic group substitution and the like, without any restriction, but it is preferably 2 to 10, more preferably 3 to 8.
In the general formulae 1 and 2 above, "y" is suitably selected depending on the rate of the hydrophilic group substitution and the like, without any restriction, but it is preferably 1 to 100, more preferably 1 to 10.
The method for obtaining the fluorosurfactant is suitably selected depending on the purpose without any restriction. For example, the fluorosurfactant is obtained by synthesizing the same, or obtained by selected from the commercially available products.
The compounds expressed by the general formulae 1 and 2 can be synthesized by an addition reaction of a fluoroalcohol and epoxide For example, the method described in S. M. Heilmann et al., J. Fluorine Chem, 59, 1992, 387-396, or the method described in "Fluorinated surfactant and repellents" Erik Kissa, MARCEL DEKKER, INC., pp. 64-69 can be used.
The fluoroalcohol for used in the synthesis may be selected from the commercial products. Examples of such commercial product include A-1420 ($F(CF_2)_4CH_2CH_2OH$), A- 1620 ($F(CF_2)_6CH_2CH_2OH$), and A-1630 ($F(CF_2)_6(CH_2)_3OH$), all manufactured by Daikin Chemical Sales Ltd.
The commercial product of the fluorosurfactant is suitably selected depending on the intended purpose without any restriction. Examples thereof include Zonyl FSN 100 (nonionic surfactant, manufactured by Sigma-Aldrich Corporation), and SURFLON S-145 (nonionic surfactant, manufactured by AGC Seimi Chemical Co., Ltd.).
The coverage rate of the crystalline polymer Microporous film with the fluorosurfactant is suitably adjusted depending on the surface area of the crystalline polymer microporous film without any restriction, provided that at least part of the crystalline polymer microporous film is covered with the fluorosurfactant. For example, the method described in JP-ANo. 08-283447 can be used. Specifically, the surface area has a correlation with the porosity of the crystalline polymer microporous film, and the coverage rate of the crystalline polymer microporous film can be optimized based on the relationship with the porosity. Concretely, it can be calculated using the following formulae 1 and 2.
The porosity is suitably selected depending on the intended purpose without any restriction, but it is preferably 60% or more, more preferably 60% to 95%. When the porosity is less than 60%, the hydrophilicity of the resulting crystalline polymer microporous membrane is low, and thus the desired flow rate cannot be attained by such crystalline polymer microporous membrane. When the porosity is more than 95%, the physical strength of the resulting crystalline polymer microporous membrane is low.
The lower the porosity of the crystalline polymer microporous film is, the lower the coverage rate of the crystalline polymer microporous film with the fluorosurfactant. The higher the porosity is, the higher the coverage rate is. However, any coverage rate is acceptable as long as it is in the range specified by the following formulae 1 and 2.
When the coverage rate is less than the range specified by the following formulae 1 and 2, hydrophilicity of the resulting crystalline polymer microporous membrane is excessively high, and thus long filtration life time thereof may not be attained. When the coverage rate is more than such range, the resulting crystalline polymer microporous membrane may cause clogging.

$$(C/5) - 11.5 \leq D \leq (C/5) - 9.5 \qquad \text{Formula 1}$$

$$D = (\text{applied weight of fluorosurfactant/weight of crystalline polymer microporous membrane}) \times 100 \qquad \text{Formula 2}$$

In the formula 1 above, "C" is a porosity of a crystalline polymer microporous film.

<Crosslinking Agent>

The fluorosurfactant is preferably crosslinked using a first crosslinking agent. Such crosslinkages contribute to maintain hydrophilicity of the membrane for a long period of time, expand the life time of the crystalline polymer microporous membrane as a filter, and improve the durability of the crystalline polymer microporous membrane.

Moreover, the first crosslinking agent is preferably crosslinked using a second crosslinking agent. By crosslinking the first crosslinking agent with assistance of the second crosslinking agent, water resistance, chemical resistance, and the like of the crystalline polymer microporous membrane are improved.

<<First Crosslinking Agent>>

The first crosslinking agent is suitably selected depending on the intended purpose without any restriction. Examples thereof include an epoxy compound, an isocyanate compound, an aldehyde compound, a UV-crosslinkable compound, a leaving group-containing compound, a carboxylic acid compound, and a urea compound. These may be used independently, or in combination.

Among them, the epoxy compound is preferable, and polyfunctional epoxy resins having two or more functional groups per molecule are more preferable. When the epoxy compound is used as the crosslinking agent, the formed crosslinkages including ether bondings provide the crystalline polymer microporous membrane with acid resistance and alkali resistance.

-Epoxy Compound-

The epoxy compound is suitably selected depending on the intended purpose without any restriction. Examples thereof include: monoglycidyl ethers and polyglycidyl ethers, such as ethyleneglycol diglycidyl ether, and polyethylene glycol diglycidyl ether; glycerol derivatives; pentaerythritol derivatives; sorbitol derivatives; and isocyanurate derivatives. Examples of the commercially available epoxy compound include: ethyleneglycol diglycidyl ether and triglycidyl ether isocyanate (manufactured by TOKYO CHEMICAL INDUSTRY CO., LTD.); EPIOL E400 (manufactured by NOF Corporation); and DENACOL EX313, DENACOL EX411, and DENACOL EX614B (manufactured by Nagase ChemteX Corporation).

-Isocyanate Compound-

The isocyanate compound is suitably selected depending on the intended purpose without any restriction. Examples thereof include: aromatic isocyanate such as tolylene diisocyanate, naphthalene diisocyanate, tolidine diisocyanate, xylene diisocyanate, diphenylmethane diisocyanate, and triphenylmethane diisocyanate; aliphatic isocyanate such as hexamethylene diisocyanate, hexamethylene triisocyanate, and lysine ester triisocyanate; and alicyclic isocyanate such as isophorone diisocyanate.

-Aldehyde Compound-

The aldehyde compound is suitably selected depending on the intended purpose without any restriction. Examples thereof include formaldehyde, and glutaraldehyde.

-UV Crosslinkable Compound-

The UV crosslinkable compound is suitably selected depending on the intended purpose without any restriction. Examples thereof include a vinyl group-containing compound, an acrylate group-containing compound, and a methacrylate group-containing compound. Specific examples thereof include paravinyl phenol, methyl acrylate, acrylic acid, methyl methacrylate, and methacrylic acid.

-Leaving Group-Containiug Compound-

The leaving group-containing compound is suitably selected depending on the intended purpose without any restriction. Examples thereof include tetraethyleneglycol ditosylate, and chlorotriazine.

<<Second Crosslinking Agent>>

The second crosslinking agent is suitably selected depending on the intended purpose without any restriction. Examples thereof include polyhydric alcohol, polyvalent amine, and derivatives thereof.

It is preferred that the polyhydric alcohol contain at least two hydroxyl groups, the polyvalent amine contain at least two amino groups, and the derivative of the polyhydric alcohol or polyvalent amine contain at least one hydroxyl group and at least one amino group.

These second crosslinking agents are suitably used especially when the first crosslinking agent is at least one selected from the group consisting of the epoxy compound, isocyanate, aldehyde, and leaving group-containing compound.

Specific examples of the second crosslinking agent include: polyhydric alcohols such as glycerin, diglycerin, polyglycerin, propylene glycol, 1,3-butylene glycol, hexylene glycol, isoprene glycol, dipropylene glycol, ethylene glycol, ethylene glycol monomethyl ether, diethylene glycol monomethyl ether, polyethylene glycol, erythritol, pentaerythritol, dipentaerythritol, sorbitol, monosaccharides, polysaccharides, and derivatives thereof; and polyvalent amines such as ethylene diamine, diethylene triamine, triethylene tetraamine, tetraethylene pentaamine, pentaethylene hexamine, straight or branched chain polyethylene imine, Jeffamine, and derivatives thereof. These may be used independently or in combination.

Among them, pentaethylene hexamine, and ethylene glycol are preferable.

Moreover, a compound having two or more functional groups reactive with ultraviolet rays can also be used as the second crosslinking agent. Examples thereof include a divinyl compound, a diacryl compound, and a dimethacryl compound.

These second crosslinking agents are suitably used especially when the first crosslinking agent is the UV crosslinkable compound.

Specific examples of such second crosslinking agent include divinyl benzene, trimethylol propane triacrylate, polyethylene glycol diacrylate, and polyethylene glycol dimethactylate.

<crosslinking Accelerator>

It is preferred that a crosslinking accelerator be added to the first crosslinking agent, as crosslinking reactions are efficiently performed.

The crosslinking accelerator is suitably selected depending on the intended purpose without any restriction. Examples thereof include: alkaline compounds such as potassium hydroxide; acid compounds such as hydrochloric acid.

The state of the crystalline polymer microporous membrane such that the exposed surface of the crystalline polymer microporous film is covered with the fluorosurfactant and the fluorosurfactant is crosslinked with assistance of then crosslinking agent can be confirmed by extracting in a solvent such as methanol, water, and DMF, and measuring and analyzing the extracted substance by NMR, IR, or the like.

In the case where the crystalline polymer microporous membrane cannot be extracted in the solvent, it can be confirmed by finely cutting the membrane, and measuring and analyzing the resultant mixed with KBr by IR, or by decomposing the polymer using supercritical methanol, and measuring and analyzing the resulting components by MASS, NMR, IR, or the like.

Since the crystalline polymer microporous membrane contains the crystalline polymer microporous film in which at least part of the exposed surface thereof is covered with the fluorosurfactant, the crystalline polymer microporous membrane of the present invention enables to have a characteristic asymmetric pore structure as well as having hydrophilicity, and thus the filtration life time thereof is further improved. This is probably because of a unique asymmetric pore structure of the crystalline polymer microporous membrane, in which the fluorosurfactant is applied thicker at the portion the closer to the fine filtering portion of the second surface (the heated surface) than at the portion closer to the coarse filtering part of the first surface (the unheated surface), the average pore diameter is continuously change from the first surface to the second surface, and the degree of the change in the average pore diameter is increased from the first surface to the second surface.

This is clear from the fact that the following relationship is satisfied.

As shown in FIG. 5A, the average pore diameter of the first surface of the crystalline microporous polymer film before being covered with the fluorosurfactant is defined as $d_3$, the average pore diameter of the second surface of the crystalline polymer microporous film before being covered with the fluorosurfactant is defined as $d_4$, and a ratio of $d_3$ to $d_4$ is expressed by $d_3/d_4$.

As shown in FIG. 5B, the average pore diameter of the first surface of the crystalline polymer microporous film after being covered with the fluorosurfactant (i.e. the first surface of the crystalline polymer microporous membrane) is defined as $d_3'$, the average pore diameter of the second surface of the crystalline polymer microporous film after being covered with the fluorosurfactant (i.e. the second surface of the crystalline polymer microporous membrane) is defined

as $d_4$', and a ratio of $d_3$' to $d_4$' is expressed by $d_3$'/$d_4$'.

Here, the crystalline polymer microporous membrane preferably satisfies ($d_3$'/d4')/($d_3$/$d_4$)>1, more preferably ($d_3$'/$d_4$')/($d_3$/$d_4$)>1.005, and ever more preferably ($d_3$'/$d_4$')/($d_3$/$d_4$)>1.01.

When the crystalline polymer microporous membrane does not satisfy ($d_3$'/$d_4$')/($d_3$/$d_4$) > 1, namely the relationship of the aforementioned ratios is ($d_3$'/$d_4$')/($d_3$/$d_4$) ≤ 1, such crystalline polymer microporous membrane has a extremely short filtration lifetime due to clogging or the like.

<Method for Producing Crystalline Polymer Microporous membrane>

The method for producing a crystalline polymer microporous membrane contains at least an asymmetric heating step, drawing step, and covering step, and may further contain a crystalline polymer film forming step and other steps, if necessary.

<<Crystalline Polymer Film Forming Step>>

A starting material used for forming an unbaked crystalline film formed of a crystalline polymer is suitably selected from those crystalline polymers mentioned above without any restriction. Among them, polyethylene, or a crystalline polymer in which hydrogen atoms of polyethylene are replaced with fluorine atoms is suitably used, and polytetrafluoroethylene (PTFE) is particularly preferably used.

The crystalline polymer used as the starting material preferably has a number average molecular weight of 500 to 50,000,000, more preferably 1,000 to 10,000,000.

The crystalline polymer used as the starting material is preferably polyethylene, such as polytetrafluoroethylene. As polytetrafluoroethylene, those produced by emulsification polymerization can be used. Preferably, fine polytetrafluoroethylene powder obtained by coagulating aqueous dispersed elements obtained from the emulsification polymerization is used.

Polytetrafluoroethylene used as the starting material preferably has a number average molecular weight of 2,500,000 to 10,000,000, more preferably 3,000,000 to 8,000,000.

A starting material of polytetrafluoroethylene is suitably selected from those known in the art without any restriction, and can be selected from the commercially available starting materials thereof. Preferable examples of the commercial product thereof include POLYFLON fine powder F104U, manufactured by DAIKIN INDUSTRIES, LTD.

It is preferred that a film be prepared by mixing the starting material of Polytetrafluoroethylene and an extrusion aid, subjecting the mixture to paste extrusion and drawing the mixture under pressure. The extrusion aid is preferably a liquid lubricant, and specific examples thereof include solvent naphtha and white oil. A commercially available product may be used as the extrusion aid, for example a hydrocarbon oil such as ISOPAR produced by Esso Sekiyu K. K. The amount of the extrusion aid to be added is preferably in the range of 20 parts by mass to 30 parts by mass relative to 100 parts by mass of the crystalline polymer.

In general, the paste extrusion is preferably carried out at a temperature of 50°C to 80°C. The shape into which the mixture is extruded is suitably selected depending on the intended purpose without any restriction, but the mixture is preferably extruded into a rod. The extruded matter is subsequently drawn into a film under pressure. The drawing under pressure may, for example, be performed by calendering at a rate of 50 m/min, using a calender roll. The temperature at which the drawing under pressure is performed is generally set at 50°C to 70°C.

Thereafter, the film is preferably heated so as to remove the extrusion aid and thus to form an unbaked crystalline polymer film. The heating temperature at this time is suitably set depending on the crystalline polymer for use, but is preferably 40°C to 400°C, more preferably 60°C to 350°C. When polytetrafluoroethylene is used as the crystalline polymer, for example, the heating temperature is preferably 150°C to 280°C, more preferably 200°C to 255°C.

The heating may be performed, for example, by placing the film in a hot-air drying oven. The thickness of the unbaked crystalline polymer film thus produced may be suitably adjusted depending on the thickness of the crystalline polymer microporous membrane to be produced as a final product, and it is also necessary to adjust the thickness under the consideration of reduction in thickness caused by drawing in a subsequent step.

For the production of the crystalline polymer unheated film, the descriptions in "Polyflon Handbook" (published by DAIKIN INDUSTRIES, LTD, Revised Edition of the year 1983) may be suitably used as a reference, and applied.

<<Asymmetric Heating Step>>

The asymmetric heating step is heating one surface of a film formed of the crystalline polymer with a temperature gradient in the film thickness direction so as to form a semi-baked film.

Here, the term "semi-baked" means that the crystalline polymer is heated at a temperature equal to or higher than the melting point of the baked crystalline polymer, and equal to or lower than the melting point of the unbaked

crystalline polymer plus 15°C.

Moreover, the term "unbaked crystalline polymer" means a crystalline polymer which has not been heated for baking, and the term "the melting point of the crystalline polymer" means a peak temperature on an endothermic curve which is formed when the calorific value of the unbaked crystalline polymer is measured by a differential scanning calorimeter. The melting points of the baked and unbaked crystalline polymers vary depending on the crystalline polymer for use or an average molecular weight thereof, but are preferably 50°C to 450°C, more preferably 80°C to 400°C.

The selection of such temperature range is based upon the following. In the case of polytetrafluoroethylene, for example, the melting point of baked polytetrafluoroethylene is approximately 324°C and the melting point of unbaked polytetrafluoroethylene is approximately 345°C. Accordingly, to produce a semi-baked film from the polytetrafluoroethylene film, the film is preferably heated at a temperature of 327°C to 360°C, more preferably 335°C to 350°C, and for example at 345°C. The semi-baked film is in the state where a film having a melting point of approximately 324°C coexists with a film having a melting point of approximately 345°C.

The semi-baked film is produced by heating the one surface of the film formed of a crystalline polymer. This makes it possible to control the heating temperature in an asymmetrical manner in the thickness direction and to produce a crystalline polymer microporous membrane easily.

As for the temperature gradient in the thickness direction of the film, the temperature difference between the unheated surface and heated surface of the film is preferably 30°C or more, more preferably 50°C or more.

The method of heating the film is selected from the various methods, such as a method of blowing hot air to the crystalline polymer film, a method of bringing the crystalline polymer film into contact with a heat medium, a method of bringing the crystalline polymer film into contact with a heated member, a method of irradiating the crystalline polymer film with an infrared ray and a method of irradiating the crystalline polymer film with an electromagnetic wave.

Although the method of heating the film can be selected without any restriction, the method of bringing the crystalline polymer film into contact with a heated member and the method of irradiating the crystalline polymer film with an infrared ray are particularly preferable. As the heated member, a heating roller is particularly preferable. Use of the heating roller makes it possible to continuously perform semi-baking in an assembly-line operation in an industrial manner and makes it easier to control the temperature and maintain the apparatus. The temperature of the heating roller can be set at the temperature for performing the semi-baking. The duration for the contact between the heating roller and the film may be long enough to sufficiently perform the intended semi-baking, and is preferably 30 seconds to 120 seconds, more preferably 45 seconds to 90 seconds, and even more preferably 60 seconds to 80 seconds.

The method of the infrared ray irradiation is suitably selected from those known in the art without any restriction.

For the general definition of the infrared ray, "Infrared Ray in Practical Use" (published by Ningentorekishisha in 1992) may be referred to. Here, the infrared ray means an electromagnetic wave having a wavelength of 0.74 μm to 1,000 μm. Within this range, an electromagnetic wave having a wavelength of 0.74 μm to 3 μm is defined as a near-infrared ray, and an electromagnetic wave having a wavelength of 3 μm to 1,000 μm is defined as a far-infrared ray.

Since the temperature difference between the heated surface and the unheated surface of the semi-baked film is preferably large, it is desirable to use a far-infrared ray that is advantageous for heating the front surface.

A device for applying the infrared ray is suitably selected depending on the intended purpose without any restriction, provided that it can apply an infrared ray having a desired wavelength. Generally, an electric bulb (halogen lamp) is used as a device for applying the near-infrared ray, while a heating element such as a metal oxidized surface, quartz or ceramic is used as a device for applying the far-infrared ray.

Also, infrared irradiation enables the film to be continuously semi-baked in an assembly-line operation in an industrial manner and makes it easier to control the temperature and maintain the device. Moreover, since the infrared irradiation is performed in a noncontact manner, it is clean and does not allow defects such as piling to arise.

The temperature of the film surface when irradiated with the infrared ray can be controlled by the output of the infrared irradiation device, the distance between the infrared irradiation device and the film surface, the irradiation time (conveyance speed) and/or the atmospheric temperature, and may be adjusted to the temperature at which the film is semi-baked. The temperature is preferably 327°C to 380°C, more preferably 335°C to 360°C. When the temperature is lower than 327°C, the crystallized state may not change and thus the pore diameter may not be able to be controlled. When the temperature is higher than 380°C, the entire film may melt, thus possibly causing extreme deformation or thermal decomposition of the polymer.

The duration for the infrared irradiation is suitably adjusted depending on the intended purpose without any restriction, but is long enough to perform sufficient semi-baking, preferably 30 seconds to 120 seconds, more preferably 45 seconds to 90 seconds, and even more preferably 60 seconds to 80 seconds.

The heating in the asymmetric heating step may be carried out continuously or intermittently.

In the case where the second surface of the film is continuously heated, it is preferable to simultaneously perform heating of the second surface and cooling of the first surface of the film to maintain the temperature gradient of the film between the first surface and second surface.

The method of cooling the second surface is suitably selected depending on the intended purpose without any

restriction. Examples thereof include a method of blowing cold air, a method of bringing the second surface into contact with a cooling medium, a method of bringing the second surface into contact with a cooled material and a method of cooling the second surface by cooling in air. It is preferred that the cooling be performed by bringing the unheated surface into contact with the cooled material. A cooling roller is particularly preferable as the cooled material. Use of the cooling roller makes it possible to continuously perform semi-baking in an assembly-line operation in an industrial manner and makes it easier to control the temperature and maintain the apparatus. The temperature of the cooling roller can be set so as to generate a difference to the temperature for performing the semi-baking. The duration for the contact between the cooling roller and the semi-baked film may be long enough to sufficiently perform the intended semi-baking, and considering the fact that it is performed at the same time as heating, is generally 30 seconds to 120 seconds, preferably 45 seconds to 90 seconds, and even more preferably 60 seconds to 80 seconds.

The surface material of the heating roller and cooling roller is generally stainless steel that is excellent in durability, particularly preferably SUS316. In the method for producing a crystalline polymer microporous membrane, it is also a preferable embodiment that the unheated surface of the film is brought into contact with a heating and cooling roller. Also, the heated surface of the film may be brought into contact with a roller having the temperature lower than the heating and cooling roller. For example, a roller maintaining ambient temperature may be brought into contact with and press the film from the heating surface of the film so as to make the film closely fit to the heating roller. Moreover, the heated surface of the film may be brought into contact with a guide roller before or after the contact with the heating roller.

Meanwhile, in the case where the heating in the asymmetrically heating step is carried out intermittently, it is preferable to heat or cool the heated surface of the film intermittently so as to restrain increase in the temperature of the unheated surface.

<<Drawing Step>>

The semi-baked film is drawn after the semi-baking. The drawing is preferably performed in the both the length direction and width direction. The film may be drawn in the length direction, followed by drawn in the width direction, or may be drawn in the biaxial direction at the same time.

In the case where the film is sequentially drawn in the length direction and width direction, it is preferred that the film be drawn in the length direction first, then be drawn in the width direction.

The extension rate of the film in the length direction is preferably 4 times to 100 times, more preferably 8 times to 90 times, and even more preferably 10 times to 80 times. The temperature for the drawing in the length direction is preferably 100°C to 300°C, more preferably 200°C to 290°C, and even more preferably 250°C to 280°C.

The extension rate of the film in the width direction is preferably 10 times to 100 times, more preferably 12 times to 90 times, even more preferably 15 times to 70 times, and particularly preferably 20 times to 40 times. The temperature for the drawing in the width direction is preferably 100°C to 300°C, more preferably 200°C to 290°C, and even more preferably 250°C to 280°C.

The extension rate of the film in terms of the area thereof is preferably 50 times to 300 times, more preferably 75 times 280 times, and even more preferably 100 times to 260 times. Before the drawing is performed on the film, the film may be pre-heated at the temperature equal to or lower than the temperature for the drawing.

Heat curing may be performed, if necessary, after the drawing. The temperature for the heat curing is generally equal to or higher than the temperature for the drawing, but is lower than the melting point of the baked crystalline polymer.

<<Covering Step>>

The covering step is applying a fluorosurfactant to an exposed surface of the drawn film so as to cover the exposed surface of the drawn film.

The method for applying the fluorosurfactant in this step is suitably selected depending on the intended purpose without any restriction. Examples thereof include a method in which the drawn film is immersed in the fluorosurfactant, and a method in which the drawn film is coated with the fluorosurfactant.

After applying the fluorosurfactant (by immersing or coating), the drawn film is subjected to annealing to thereby coat the exposed surface of the drawn film with the fluorosurfactant.

When the fuorosurfactant is applied, in the case where the first crosslinking agent and the second crosslinking agent are further applied (by immersing or coating), the exposed surface of the drawn film is covered with the fluorosurfactant by annealing, the fluorosurfactant is crosslinked with assistance of the first crosslinking agent, and the first crosslinking agent is crosslinked with assistance of the second crosslinking agent.

A solvent used for the application of the fluorosurfactant, optionally used for the application of the first crosslinking agent, second crosslinking agent, and crosslinking accelerator is suitably selected depending on the intended purpose without any restriction. Examples thereof include: water; alcohols such as methanol, ethanol, isopropanol, ethylene

glycol; ketones such as acetone, and methylethyl ketone; ethers such as tetrahydrofuran, dioxane, propylene glycol monoethyl ether acetate, dimethyl formamide; and dimethyl sulfoxide.

The amount of the fluorosurfactant for use is suitably selected depending on the intended purpose without any restriction, provided that the desirable coverage rate specified by the formulae 1. and 2 mentioned above is satisfied.

An amount of the first crosslinking agent for use is suitably selected depending on the amount of the fluorosurfactant or the like. The amount of the first crosslinking agent is preferably 1 part by mass to 10,000 parts by mass, more preferably 2.5 parts by mass to 7,500 parts by mass, and even more preferably 5 parts by mass to 5,000 parts by mass relative to 100 parts by mass of the fluorosurfactant.

When the amount of the first crosslinking agent is less than 1 part by mass relative to 100 parts by mass of the fluorosurfactant, the resulting crystalline polymer microporous membrane cannot attain high hydrophilicity and a long life time as a filtration filter. When the amount of the first crosslinking agent is more than 10,000 parts by mass, an excessive amount of unreacted functional groups of the first crosslinking agent remains, which may adversely affect hydrophilicity of the resulting crystalline polymer microporous membrane.

The first crosslinking agent may be applied after or at the same time as when the fluorosurfactant is applied to the crystalline polymer microporous membrane (by immersion or coating).

An amount of the second crosslinking agent for use is suitably selected depending on the amount of the first crosslinking agent or the like. The amount of the second crosslinking agent is preferably 0.1 parts by mass to 1,000 parts by mass, more preferably 0.25 parts by mass to 750 parts by mass, and even more preferably 0.5 parts by mass to 500 parts by mass relative to 100 parts by mass of the first crosslinking agent.

When the amount of the second crosslinking agent is less than 0.1 parts by mass relative to 100 parts by mass of the first crosslinking agent, water resistance of the resulting crystalline polymer microporous membrane may not be improved. When the amount of the second crosslinking agent is more than 1,000 parts by mass, the reactivity to the fluorosurfactant may reduce.

The second crosslinking agent may applied after or at the same time as when the fluorosurfactant and the first crosslinking agent are applied to the crystalline polymer microporous membrane (by immersion or coating).

An amount of the crosslinking accelerator for use is suitably selected depending on the intended purpose without any restriction.

The temperature for the annealing is preferably in the range of 100°C to 180°C, more preferably in the range of 120°C to 150°C.

The duration for the heating is preferably 1 minute to 60 minutes, more preferably 1 minute to 45 minutes, and even more preferably 1 minute to 30 minutes.

When the temperature for the annealing is lower than 100°C or the duration is shorter than 1 minute, hydrophilization or a crosslinking reaction may not be sufficiently progressed, and as a result, water resistance, acid resistance, alkali resistance or the like of the resulting crystalline polymer microporous membrane may be impaired. When the temperature for the annealing is higher than 180°C or the duration is longer than 60 minutes, the fluorosurfactant, the first crosslinking agent, the second crosslinking agent, and the like may be decomposed.

At the time when the fluorosurfactant, optionally the first crosslinking agent and the second crosslinking agent are applied, other additives such as an antioxidant and the like can be added, provided that they do not adversely affect the obtainable effect of the present invention.

Examples of commercial products of the antioxidant include dibutylhydroxytoluene (BHT), IRGANOX 1010, IRGANOX 1035FF, and IRGANOX 565.

The method for producing a crystalline polymer microporous membrane including the covering step can perform hydrophilization without performing radiation of UV laser beam or ArF laser beam, or chemical etching, can efficiently produce a hydrophilic crystalline polymer microporous membrane, and can produce a crystalline polymer microporous membrane having excellent hydrophilicity, chemical resistance, filtration rate, and life time as a filtration filter.

The crystalline polymer microporous membrane can be applied for various uses without any restriction, but is particularly preferably used as a filtration filter, which will be explained hereinafter.

(Filtration Filter)

A filtration filter contains the aforementioned crystalline polymer microporous membrane.

When the crystalline polymer microporous membrane is used for a filtration filter, filtration is carried out with the unheated surface (i.e., the surface having the larger average pore diameter) facing the inlet side. In other words, the surface having the large pore size is used as the filtration surface of the filter. By carrying out filtration using the surface having the larger average pore diameter (i.e. the unheated surface) for the inlet side, it is possible to efficiently trap fine particles.

Also, since the crystalline polymer microporous membrane of the present invention has a large specific surface area, fine particles introduced from its front surface can be removed by adsorption or adhesion before reaching a portion

with the smallest pore diameter. Therefore, the filter hardly allows clogging to arise and can sustain high filtration efficiency for a long period of time.

The filter is capable of filtration at least at a rate of 5 mL/$cm^2$·min or higher, when the filtration is carried out at a differential pressure of 0.1 kg/$cm^2$.

Examples of the form of the filter include a pleated form in which a filtration membrane is corrugated, a spiral form in which a filtration membrane is continuously wound, a frame and plate form in which disc-shaped filtration membranes are stacked on top of one another, and a tube form in which a filtration membrane is formed as a tube. Among these, a pleated form is particularly preferable in that the effective surface area used for filtration per cartridge can be increased.

Filter cartridges are classified into element exchange type filter cartridges in which only filter elements are replaced when filtration membranes having been degraded need to be replaced, and capsule-type filter cartridges in which filter elements are provided integrally with filtration housings and both the filter elements and the housings are used in a disposable manner.

FIG. 1 is a developed view showing the structure of an element exchange type pleated filter cartridge element. Sandwiched between two membrane supports 102 and 104, a microfiltration membrane 103 is corrugated and wound around a core 105 having multiple liquid-collecting slots, and a cylindrical object is thus formed.

An outer circumferential cover 101 is provided outside the foregoing members so as to protect the microfiltration membrane. At both ends of the cylindrical object, the microfiltration membrane is sealed with end plates 106a and 106b. The end plates are connected to a sealing portion of a filter housing (not shown), with a gasket 107 placed in between. A filtered liquid is collected through the liquid-collecting slots of the core and discharged from a fluid outlet 108.

Capsule-type pleated filter cartridges are shown in FIGs. 2 and 3.

FIG. 2 is a developed view showing the overall structure of a microfiltration membrane filter element before installed in a housing of a capsule-type filter cartridge. Sandwiched between two supports, a primary support 1 and a secondary support 3, a microfiltration membrane 2 is corrugated and wound around a filter element core 7 having multiple liquid-collecting slots, and a cylindrical object is thus formed. A filter element cover 6 is provided outside the foregoing members so as to protect the microfiltration membrane. At both ends of the cylindrical object, the microfiltration membrane 2 is sealed with an upper end plate 4 and a lower end plate 5.

FIG. 3 shows the structure of a capsule-type pleated filter cartridge in which the filter element 10 has been installed in a housing so as to form a single unit. A filter element 10 is installed in a housing composed of a housing base 12 and a housing cover 11. The lower end plate is connected in a sealed manner to a water-collecting tube (not shown) at the center of the housing base 12 by means of an O-shaped ring 8. A liquid enters the housing from a liquid inlet nozzle 13 and passes through a filter medium 9, then the liquid is collected through the liquid-collecting slots of the filter elements core 7 and discharged from a liquid outlet nozzle 14. In general, the housing base 12 and the housing cover 11 are thermally fused in a liquid-tight manner at a fusing portion 17. An air vent 15 is provided at the upper portion of the housing, and a drain 16 is provided at the bottom portion of the housing.

FIG. 2 shows an instance where the lower end plate and the housing base 12 are connected in a sealed manner by means of the O-shaped ring 8. It should be noted that the lower end plate and the housing base 12 may be connected in a sealed manner by thermal fusing or with an adhesive. Also, the housing base 12 and the housing cover 11 may be connected in a sealed manner with an adhesive as well as by thermal fusing. FIGS. 1 to 3 show specific examples of microfiltration filter cartridges, and note that the present invention is not confined to the examples shown in these drawings.

Having a high filtering function and long lifetime as described above, the filter using the crystalline polymer microporous membrane of the present invention enables a filtration device to be compact. In a conventional filtration device, multiple filtration units are used in parallel so as to offset the short filtration life; use of the filter of the present invention for filtration makes it possible to greatly reduce the number of filtration units used in parallel. Furthermore, since it is possible to greatly lengthen the period of time for which the filter can be used without replacement, it is possible to cut costs and time necessary for maintenance.

The filter of the present invention for filtration can be used in a variety of situations where filtration is required, notably in microfiltration of gases, liquids, etc. For instance, the filter can be used for filtration of corrosive gases and gases for use in the semiconductor industry, and filtration and sterilization of cleaning water for use in the electronics industry, water for medical uses, water for pharmaceutical production processes and water for foods and drinks. It should be particularly noted that since the filter of the present invention is superior in heat resistance and chemical resistance, the filter can be effectively used for high-temperature filtration and filtration of reactive chemicals, for which conventional filters cannot be suitably used.

## Examples

Examples of the present invention will be explained hereinafter, but these examples shall not be construed as limiting the scope of the present invention.

<Synthesis Example 1>

An addition reaction was initiated and proceeded using A-1420 manufactured by Daikin Chemical Sales Ltd. ($F(CF_2)_4CH_2CH_2OH$) and ethylene oxide ($C_2H_4O$) in the manner as described in S. M. Heilmann et al., J. Fluorine Chem, 59, 1992, 387-396 to thereby obtain a fluorosurfactant expressed by the following structural formula 1. The compound expressed by the structural formula 1 had a rate of hydrophilic group substitution of 28.9%.

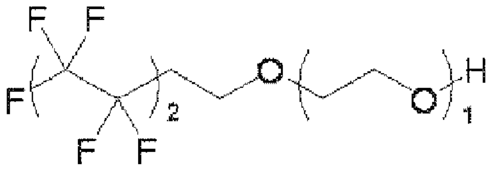

Structural Formula 1

<Synthesis Example 2>

An addition reaction was initiated and proceeded using A-1620 manufactured by Daikin Chemical Sales Ltd. ($F(CF_2)_6CH_2CH_2OH$) and ethylene oxide ($C_2H_4O$) in the manner as described in S. M. Heilmann et al., J. Fluorine Chem, 59, 1992, 387-396 to thereby obtain a fluorosurfactant expressed by the following structural formula 2. The compound expressed by the structural formula 2 had a rate of hydrophilic group substitution of 29.4%.

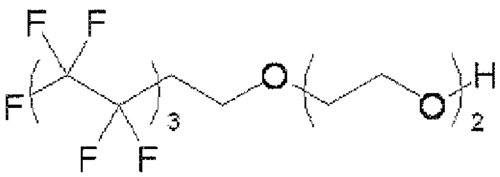

Structural Formula 2

<Synthesis Example 3>

An addition reaction was initiated and proceeded using A-1630 manufactured by Daikin Chemical Sales Ltd. ($F(CF_2)_6CH_2CH_3OH$) and ethylene oxide ($C_2H_4O$) in the manner as described in S. M. Heilmann et al., J. Fluorine Chem, 59, 1992, 387-396 to thereby obtain a fluorosurfactant expressed by the following structural formula 3. The compound expressed by the structural formula 3 had a rate of hydrophilic group substitution of 10.7%.

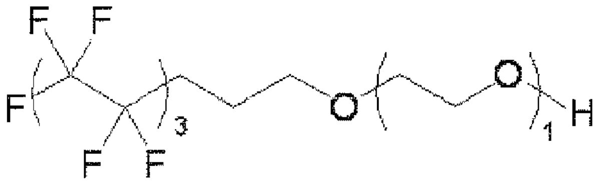

Structural Formula 3

(Example 1)

<Production of Crystalline Polymer Porous Membrane 1>

-Preparation of Semi-Baked Film-

To 100 parts by mass of polytetrafluoroethylene fine powder having a number average molecular weight of 6,200,000 (POLYFLON fine powder F104U, manufactured by DAIKIN INDUSTRIES, LTD), 27 parts by mass of hydrocarbon oil (ISOPAR manufactured by Esso Sekiyu K. K.) was added as an extrusion aid, and the obtained paste was extruded in the shape of a rod. The extruded paste was subjected to calendering at the speed of 50 m/min. by a calender

roller heated at 70°C to thereby prepare a polytetrafluoroethylene film. This film was then placed in a hot air drying oven having the temperature of 250°C to dry and remove the extrusion aid, to thereby prepare an unbaked polytetrafluoroethylene film having an average thickness of 100 μm, average width of 150 mm, and specific gravity of 1.55.

A surface (a heating surface) of the obtained unbaked polytetrafluoroethylene film was heated by a roller (surface material: SUS316) heated at 345°C for 1 minute, to thereby prepare a semi-baked film.

The obtained semi-baked film was then drawn in the length direction by 12.5 times at the temperature of 270°C, then the drawn film was wound up with a winding roller. Thereafter, the film was pre-heated at 305°C, following by being drawn in the width direction by 30 times at the temperature of 270°C with both ends thereof be pinched by clips. The drawn film was then heat set at 380°C . The extension rate of the drawn film was 260 times in terms of the area.

-Hydrophilization-

In a methylethyl ketone solution containing 5% by mass of the fluorosurfactant expressed by the structural formula 1 obtained in Synthesis Example 1 and 0.5% by mass of DENACOL EX411 (manufactured by Nagase ChemiteX Corporation), the drawn film was immersed for 10 minutes, an then the drawn film was taken out from the solution and subjected to annealing for 10 minutes at 150°C in atmospheric air. Thereafter, the processed film was immersed in boiling water for 30 minutes to carry out washing, and then dried, to thereby prepare a crystalline polymer microporous membrane 1.

(Example 2)

<Production of Crystalline Polymer Porous Membrane 2>

A crystalline polymer microporous membrane 2 of Example 2 was obtained in the same manner as in Example 1, provided that the hydrophilization process was changed as follows.

-Hydrophilization-

In a methylethyl ketone solution containing 5% by mass of the fluorosurfactant expressed by the structural formula 1 obtained in Synthesis Example 1, the drawn film was immersed for 10 minutes, and then the drawn film was taken out from the solution and subjected to annealing for 10 minutes at 150°C in atmospheric air. Thereafter, the processed film was immersed in boiling water for 30 minutes to carry out washing, and then dried.

(Example 3)

<Production of Crystalline Polymer Porous Membrane 3>

A crystalline polymer microporous membrane 3 of Example 3 was obtained in the same manner as in Example 1, provided that the hydrophilization process was changed as follows.

-Hydrophilization-

In a methylethyl ketone solution containing 5% by mass of the fluorosurfactant expressed by the structural formula 1 obtained in Synthesis Example 1 and 0.5% by mass of diphenylmethane diisocyanate (Tokyo Chemical Industry Co., Ltd.), the drawn film was immersed for 10 minutes, and then the drawn film was taken out from the solution and subjected to annealing for 10 minutes at 150°C in atmospheric air. Thereafter, the processed film was immersed in boiling water for 30 minutes to carry out washing, and then dried.

(Example 4)

<Production of Crystalline Polymer Porous Membrane 4>

A crystalline polymer microporous membrane 4 of Example 4 was obtained in the same manner as in Example 1, provided that the hydrophilization process was changed as follows.

-Hydrophilization-

In a methylethyl ketone solution containing 0.5% by mass of the fluorosurfactant expressed by the structural

formula 1 obtained in Synthesis Example 1 and 0.05% by mass of ethylene glycol diglycidyl ether (Tokyo Chemical Industry Co., Ltd.), the drawn film was immersed for 10 minutes, and then the drawn film was taken out from the solution and subjected to annealing for 10 minutes at 150°C in atmospheric air. Thereafter, the processed film was immersed in boiling water for 30 minutes to carry out washing, and then dried.

(Example 5)

<Production of Crystalline Polymer Porous Membrane 5>

A crystalline polymer microporous membrane 5 of Example 5 was obtained in the same manner as in Example 1, provided that the hydrophilization process was changed as follows.

-Hydrophilization-

In a methylethyl ketone solution containing 5% by mass of the fluorosurfactant expressed by the structural formula 2 obtained in Synthesis Example 2 and 0.5% by mass of EPIOL E400 (manufactured by NOF Corporation), the drawn film was immersed for 10 minutes, and then the drawn film was taken out from the solution and subjected to annealing for 10 minutes at 150°C in atmospheric air. Thereafter, the processed film was immersed in boiling water for 30 minutes to carry out washing, and then dried.

(Example 6)

<Production of Crystalline Polymer Porous Membrane 6>

A crystalline polymer microporous membrane 6 of Example 6 was obtained in the same manner as in Example 1, provided that the hydrophilization process was changed as follows.

-Hydrophilization-

In a methylethyl ketone solution containing 5% by mass of the fluorosurfactant expressed by the structural formula 1 obtained in Synthesis Example 1, 0.5% by mass of DENACOL EX411 (manufactured by Nagase ChemiteX Corporation), 0.3% by mass of pentaethylene hexamine (manufactured by Tokyo Chemical Industry Co., Ltd.)and 0.03% by mass of DBU (manufactured by Wako Pure Chemical Industries, Ltd.), the drawn film was immersed for 10 minutes, and then the drawn film was taken out from the solution and subjected to annealing for 30 minutes at 100°C in atmospheric air. Thereafter, the processed film was immersed in boiling water for 30 minutes and in ethanol for 30 minutes to carry out washing, and then dried.

(Example 7)

<Production of Crystalline Polymer Porous Membrane 7>

A crystalline polymer microporous membrane 7 of Example 7 was obtained in the same manner as in Example 1, provided that the hydrophilization process was changed as follows.

-Hydrophilization-

In a methylethyl ketone solution containing 5% by mass of the fluorosurfactant expressed by the structural formula 3 obtained in Synthesis Example 3, the drawn film was immersed for 10 minutes, and then the drawn film was taken out from the solution and subjected to annealing for 10 minutes at 150°C in atmospheric air. Thereafter, the processed film was immersed in boiling water for 30 minutes to carry out washing, and then dried.

(Comparative Example 1)

-Production of Crystalline Polymer Porous Membrane 8-

A crystalline polymer microporous membrane 8 of Comparative Example 1 formed of a hydrophilic polytetrafluoroethylene membrane having asymmetric pores was obtained in the same manner as Example 1, provided that the hydraphilization process was omitted.

(Comparative Example 2)

-Production of Crystalline Polymer Porous Membrane 9-

A crystalline polymer microporous membrane 9 of Comparative Example 2 formed of a hydrophilic polytetrafluoroethylene membrane having symmetric pores was obtained in the same manner as in Example 1, provided that the hydrophilization process was changed as follows.

-Hydrophilizatian-

In a methylethyl ketone solution containing 5% by mass of the fluorosurfactant expressed by the structural formula 1 obtained in Synthesis Example 1 and 0.5% by mass ethyleneglycol diglycidyl ether (manufactured by Tokyo Chemical Industry Co., Ltd.), a polytetrafluoroethylene microporous membrane (a symmetric membrane, manufactured by JGI) was immersed, and then the immersed membrane was taken out from the solution and subjected to annealing for 10 minutes at 150°C in atmospheric air. Thereafter, the processed membrane was immersed in boiling water for 30 minutes to carry out washing, and then dried.

(Comparative Example 3)

-Production of Crystalline Polymer Porous Membrane 10-

A crystalline polymer microporous membrane 10 of Comparative Example 3 formed of a hydrophilic polytetrafluoroethylene membrane having symmetric pores was obtained in the same manner as in Example 1, provided that the hydrophilization process was changed as follows.

-Hydrophilization-

In a methylethyl ketone solution containing 5% by mass of the fluorosurfactant expressed by the structural formula 1 obtained in Synthesis Example 1, a polytetrafluoroethylene microporous membrane (a symmetric membrane, manufactured by JGI) was immersed, and then the immersed membrane was taken out from the solution and subjected to annealing for 10 minutes at 150°C in atmospheric air. Thereafter, the processed membrane was immersed in boiling water for 30 minutes to carry out washing, and then dried.

(Comparative Example 4)

-Production of Crystalline Polymer Porous Membrane 11-

A crystalline polymer microporous membrane 11 of Comparative Example 4 formed of a hydrophilic polytetrafluoroethylene membrane having asymmetric pores was obtained in the same manner as in Example 1, provided that the hydrophilization process was changed as follows.

-Hydrophilization-

In a 0.03% by mass hydrogen peroxide solution, the drawn film which had been impregnated with ethanol (liquid temperature 40°C) in advance was immersed. Twenty hours later, the drawn film was taken out from the solution, and ArF excimer laser light (wavelength: 193 nm) was applied onto the drawn film from the top at fluence of 25 mJ/cm$^2$/pulse and irradiance of 10 J/cm$^2$ to thereby perform a hydralicization treatment with the hydrogen peroxide solution.

(Comparative Example 5)

-Production of Crystalline Polymer Porous Membrane 12-

A crystalline polymer microporous membrane 12 of Comparative Example 5 formed of a hydrophilic polytetrafluoroethylene membrane having asymmetric pores was obtained in the same manner as in Comparative Example 4, provided that the 0.03% by mass hydrogen peroxide solution was replaced with a 0.179% by mass methylethyl ketone aqueous solution.

<Measurement of Average Pore Diameter and Evaluation of Shape of Pores>

The crystalline polymer microporous membranes of Examples 1 to 7 and Comparative Examples 1 to 5 were each cut along the length direction of the membrane. A photograph (a SEM photograph, magnification of 1,000 times to 5,000 times) of the membrane surface, which was the cut surface of the membrane in the thickness direction, was taken by a scanning electron microscope (HITACHI S-4000, HITACHI E-1030 for vapor deposition, both manufactured by Hitachi, Ltd.). The obtained photograph was scanned by an image processer (Device: TV Image Processer TVIP-4100II, manufactured by Nippon Avionics Co., Ltd., Control Software: TV Image Processer Image Command 4198, manufactured by RATOC SYSTEM ENGINEERING CO., LTD.), to thereby obtain an image only consisted of crystalline polymer fibers. Diameters of 100 pores were measured on the obtained image, and were arithmetic processed to determine an average pore diameter.

Shapes of pores on the cut surface of the crystalline polymer microporous membrane in the thickness direction thereof are explained with reference with schematic drawings for more understanding.

FIG. 4A is a schematic diagram showing a cut surface of the crystalline polymer microporous membrane 40 having symmetric pores of Comparative Example 2 before coated with the fluorosurfactant (before hydrophilization).

Comparing the average pore diameter $d_1$ on the first surface of the crystalline polymer microporous membrane 40 having the symmetric pores before coated with the fluorosurfactant (before hydrophilization) with the average pore diameter $d_2$ on the second surface thereof in FIG. 4A, the ratio ($d_1/d_2$) of $d_1$ to $d_2$ on the observed SEM was 1.0.

FIG. 4B is a schematic diagram showing a cut surface of the crystalline polymer microporous membrane 45 having symmetric pores of Comparative Example 2 after coated with the fluorosurfactant (after hydrophilization).

Comparing the average pore diameter $d_1$' on the first surface of the crystalline polymer microporous membrane 45 having the symmetric pores before coated with the fluorosurfactant (before hydrophilization) with the average pore diameter $d_2$' on the second surface thereof in FIG. 4B, the ratio ($d_1'/d_2'$) of $d_1$' to $d_2$' on the observed SEM was 1.0.

In Comparative Example 2, the relationship of ($d_1'/d_2'$)/($d_1d_2$) was 1.0. Based on above, it was found that the crystalline polymer microporous membrane having symmetric pores of Comparative Example 2 which had not been subjected to asymmetric heating did not have any change both in the ratio ($d_1/d_2$) and the ratio ($d_1'/d_2'$) before and after the coating with the fluorosurfactant (hydrophilization).

FIG. 5A is a schematic diagram showing a cut surface of the crystalline polymer microporous membrane 50 having asymmetric pores of Example 1 before coated with the fluorosurfactant (before hydrophilization).

When the average pore diameter on the first surface of the crystalline polymer microporous membrane 50 having the asymmetric pores before coated with the fluorosurfactant (before hydrophilization) was determined as $d_3$, and the average pore diameter on the second surface thereof was determined as $d_4$ in FIG. 5A, the ratio ($d_3/d_4$) of $d_3$ to $d_4$ on the observed SEM was 15.

FIG. 5B is a schematic diagram showing a cut surface of the crystalline polymer microporous membrane 55 having asymmetric pores of Example 1 after coated with the fluorosurfactant (after hydrophilization).

When the average pore diameter on the first surface of the crystalline polymer microporous membrane 55 having the asymmetric pores after coated with the fluorosurfactant (after hydrophilization) was determined as $d_3$, and the average pore diameter on the second surface thereof was determined as $d_4$' in FIG. 5B, the ratio ($d_3'/d_4'$) of $d_3$' to $d_4$' on the observed SEM was 15.8.

Therefore, in Example 1, the value of ($d_3'/d_4'$)/($d_3/d_4$) was 1.05.

Based on the comparison between the ratio ($d_3'/d_4'$) of the crystalline polymer microporous membrane of Example 1 after coated with the fluorosurfactant and the ratio ($d_3/d_4$) of the crystalline polymer microporous membrane thereof before coated with the fluorosurfactant, it was found that the ratio of the average pore diameter of the first surface (unheated surface) to the average pore diameter of the second surface (heated surface) was increased as a result of the coverage by the fluorosurfactant (hydrophilization).

This result had not been expected before the observation of the SEM image, and this result was attained, since in addition to that the average pore diameter of the crystalline polymer microporous membrane 50 continuously changed from the first surface to the second surface, the thickness of the hydrophilic covering portion 55 after hydrophilization using the fluorosurfactant continuously changed and gradually reduced from the first surface to the second surface. The crystalline polymer covered with the fluorosurfactant became thicker than the course filtering portion at the side of the first surface (unheated surface) of the crystalline polymer microporous membrane, as it was closer to the fine portion at the side of the second surface (heated surface), and thus a significant asymmetric pore structure, in which the degree of the continuous change in the average pore diameter from the first surface to the second surface was enlarged, could be formed.

Based on the result described above, it was made clear that the crystalline polymer microporous membrane of Example 1 could significantly prolong a lifetime as a filtration filter (filtration rate), which would be ended by clogging, because the ratio of the average pore diameter of the first surface to the average pore diameter of the second surface was large.

Similarly, in Example 2, the asymmetric membrane having $d_3/d_4$ = 15 had $d_3'/d_4'$ = 15.6 after hydrophilization, and therefore $(d_3'/d_4')/(d_3/d_4)$ = 1.04.
Similarly, in Example 3, the asymmetric membrane having $d_3/d_4$ = 15 had $d_3'/d_4'$ = 15.9 after hydrophilization, and therefore $(d_3'/d_4')/(d_3/d_4)$ = 1.06.
Similarly, in Example 4, the asymmetric membrane having $d_3/d_4$ = 15 had $d_3'/d_4'$ = 15.4 after bydrophilization, and therefore $(d_3'/d_4')/(d_3/d_4)$ = 1.03.
Similarly, in Example 5, the asymmetric membrane having $d_3/d_4$ = 15 had $d_3'/d_4'$ = 15.9 after hydrophilization, and therefore $(d_3'/d_4')/(d_3/d_4)$ = 1.06.
Similarly, in Example 6, the asymmetric membrane having $d_3/d_4$ = 15 had $d_3'/d_4'$ = 15.8 after hydrophilization, and therefore $(d_3'/d_4')/(d_3/d_4)$ 1.05.
Similarly, in Example 7, the asymmetric membrane having $d_3/d_4$ = 15 had $d_3'/d_4'$= 15.9 after hydrophilization, and therefore $(d_3'/d_4')/(d_3/d_4)$ = 1.06.
In Comparative Example 1, the asymmetric membrane having $d_3/d_4$ = 15 was not subjected to hydrophilization, and thus the average pore diameter was not changed.
In Comparative Example 3, the symmetric membrane having $d_1/d_2$= 1.0 had $d_1'/d_2'$ = 1.0 after hydrophilization, and therefore $(d_1'/d_2')/(d_1/d_2)$ = 1.0.
In Comparative Example 4, the asymmetric membrane having $d_3/d_4$ = 15 had $d_3'/d_4'$ = 15 after hydrophilization, and therefore $(d_3'/d_4')/(d_3/d_4)$ = 1.0.
In Comparative Example 5, the asymmetric membrane having $d_3/d_4$ = 15 had $d_3'/d_4'$ = 15 after hydrophilization, and therefore $(d_3'/d_4')/(d_3/d_4)$ 1.0.
The results are shown in Table 1.

<Evaluation on Hydrophilicity>

The crystalline polymer microporous membranes of Examples 1 to 7 and Comparative Examples 1 to 5 were evaluated in terms of hydrophilicity.
The evaluation for hydrophilicity was carried out with reference to the evaluation method disclosed in Japanese Patent (JP-B) No. 3075421. Specifically, it was carried out in the following manner.
A droplet of water was dropped onto a surface of a sample from the height of 5 cm, and the time required for the sample to absorb the droplet was measured. The measurement results were evaluated based on the evaluation criteria presented below. The results are shown in Table 1.

A: Absorbed immediately.
B: Naturally absorbed.
C: Absorbed only when pressure was applied, or not absorbed though the contact angle was reduced.
D: Not absorbed, i.e. repelling water.

Note that, the state of C is one of characteristics of a porous fluororesin material.

<Filtering Test>

A filtering test was performed on the crystalline polymer microporous membranes of Examples 1 to 7, and Comparative Examples 1 to 5.
A test solution containing 0.01% by mass of polystyrene latex (average particle size of 1.5 μm) was filtered through each of the membranes of Examples 1 to 7, and Comparative Examples 1 to 5, with a differential pressure of 10 kPa, and an amount of the solution filtered until the filter was clogged was measured. The results are shown in Table 1.

Table 1

| | Hydrophilic group substitution rate | Hydrophilicity | Filtering test(mL/cm$^2$) | $(d_1'/d_2')/(d_1/d_2)$ | $(d_3'/d_4')/(d_3/d_4)$ |
|---|---|---|---|---|---|
| Ex. 1 | 28.9 | A | 243 | - | 1.05 |
| Ex. 2 | 28.9 | A | 192 | - | 1.04 |
| Ex. 3 | 28.9 | A | 184 | - | 1.06 |
| Ex. 4 | 28.9 | A | 221 | - | 1.03 |
| Ex. 5 | 29.4 | A | 185 | - | 1.06 |

(continued)

| | Hydrophilic group substitution rate | Hydrophilicity | Filtering test(mL/$cm^2$) | $(d_1'/d_2')/(d_1/d_2)$ | $(d_3'/d_4')/(d_3/d_4)$ |
|---|---|---|---|---|---|
| Ex. 6 | 28.9 | A | 252 | - | 1.05 |
| Ex. 7 | 10.7 | B | 166 | - | 1.06 |
| Comp. Ex. 1 | - | D | Could not measured | - | - |
| Comp. Ex. 2 | 28.9 | A | 77 | 1.0 | - |
| Comp. Ex. 3 | 28.9 | A | 62 | 1.0 | - |
| Comp. Ex. 4 | - | C | 13 | - | 1.0 |
| Comp. Ex. 5 | - | C | 15 | - | 1.0 |

Based on the results shown in Table 1, it could be seen that the crystalline polymer microporous membranes of Examples 1 to 7 and Comparative Examples 2 to 3 were hydrophilic, the crystalline polymer microporous membrane of Comparative Example showed no hydrophilicity at all, and the crystalline polymer microporous membranes of Comparative Examples 4 to 5 had slight hydrophilicity. In the filtering test, as the PTFE microporous membrane of Comparative Example 1 did not have any hydrophilicity, and thus the measurement could not be performed. In addition, none of the membranes of Comparative Examples 2 to 5 exceeded 100 mL/$cm^2$.

On the other hand, the crystalline polymer microporous membranes of Examples 1 to 7 each required no pretreatment of hydrophilization with isopropanol, and could filter through the test solution of 100 mL/$cm^2$ or more. Therefore, it was found that the crystalline polymer microporous membrane of the present invention could significantly improved filtration lifetime.

<Evaluation on Water Resistance>

Water (200 mL) was passed through each of the crystalline polymer microporous membranes of Examples 1 to 7, and Comparative Examples 1 to 5 at the pressure of 100 kPa. This process was carried out 5 times, and the membrane was dried every time water was passed through the film.

Water resistance of the crystalline polymer microporous membranes of Examples 1 to 7, and Comparative Examples 1 to 5 were each evaluated by evaluating the membranes after the aforementioned procedure based on the evaluation criteria (A to D) used for the evaluation for the hydrophilicity. The results are shown in Table 2 below.

<Evaluation on Acid Resistance>

Acid resistance of the crystalline polymer microporous membranes of Examples 1 to 7, and Comparative Examples 1 to 5 was evaluated by immersing each membrane in a 1N hydrochloric acid solution having the temperature of 80°C for 5 hours, then evaluating the membrane based on the evaluation criteria (A to D) used for the evaluation for the hydrophilicity. The results are shown in Table 2 below.

<Evaluation on Alkali Resistance>

Alkali resistance of the crystalline polymer microporous membranes of Examples 1 to 7, and Comparative Examples 1 to 5 was evaluated by immersing each film in a IN sodium hydroxide solution having the temperature of 80°C for 5 hours, then evaluating the membrane based on the evaluation criteria (A to D) used for the evaluation for the hydrophilicity. The results are shown in Table 2 below.

Table 2

| | Water resistance | Acid resistance | Alkali resistance |
|---|---|---|---|
| Ex. 1 | A | A | A |
| Ex. 2 | B | B | B |
| Ex. 3 | A | C | C |
| Ex. 4 | A | A | A |

(continued)

| | Water resistance | Acid resistance | Alkali resistance |
|---|---|---|---|
| Ex. 5 | A | A | A |
| Ex. 6 | A | A | A |
| Ex. 7 | B | B | B |
| Comp. Ex. 1 | D | NA | NA |
| Comp. Ex. 2 | A | A | A |
| Comp. Ex. 3 | B | B | B |
| Comp. Ex. 4 | NA | NA | NA |
| Comp. Ex. 5 | NA | NA | NA |

Note that, in Table 2, "NA" means that the evaluation could not be carried out because of poor hydraphilicity.

(Example 8)

-Formation of Filter Cartridge-

The crystalline polymer microporous membrane of Example 1 was placed in between two pieces of polypropylene nonwoven fabrics, pleated so as to have a pleat width of 10.5 mm, and provided with 138 folds and formed into a cylindrical shape. The joint was fused using an impulse sealer so as to form a cylindrical object. Both ends of the cylindrical object were cut by 2 mm each, and the cut surfaces were thermally fused with polypropylene end plates so as to prepare an element exchange type filter cartridge, to thereby produce a filtration filter of Example 8.
Since the filtration filter (filter cartridge) of Example 8 used the hydrophilic crystalline polymer microporous membrane, no complicated pre-hydrophilization treatment in an aqueous system was necessary. Moreover, the filter cartridge had excellent solvent resistance, as the used crystalline polymer microporous membrane contains a crystalline polymer. Also, since the crystalline polymer microporous membrane had an asymmetric pore structure, the flow rate was high, clogging hardly arose and a long filtration lifetime was obtained.
The aforementioned crystalline polymer microporous membrane and filtration filter using the crystalline polymer microporous membrane are capable of efficiently trapping fine particles for a long period of time, which improves abrasion resistance in particle trapping ability, and superior in heat resistance and chemical resistance, so that they can be used in a variety of situations where filtration is required, notably in microfiltration of gases, liquids, etc. For instance, the crystalline polymer microporous membrane and the filtration filter can be widely used for filtration of corrosive gases and gases for use in the semiconductor industry, filtration and sterilization of cleaning water for use in the electronics industry, water for medical uses, water for pharmaceutical production processes and water for foods and drinks, high-temperature filtration and filtration of reactive chemicals.

## Claims

1. A crystalline polymer microporous membrane, comprising

   a crystalline polymer microporous film containing a crystalline polymer; and
   a fluorosurfactant covering at least part of the exposed surface of the crystalline polymer microporous film,
   wherein the crystalline polymer microporous membrane has a plurality of pores, where the average pore diameter of a first surface of the crystalline polymer microporous membrane is larger than that of a second surface thereof, and the average pore diameter of the crystalline polymer microporous membrane continuously changes from the first surface thereof to the second surface thereof.

2. The crystalline polymer microporous membrane according to claim 1, wherein the fluorosurfactant contains at least one functional group selected from the group consisting of a hydroxyl group, an amino group, and derivative groups thereof.

3. The crystalline polymer microporous membrane according to claim 2, wherein the fluorosurfactant contains the

functional group as a substituent, and a rate of functional group substitution in a molecule of the fluorosurfactant is 15% to 90%.

**4.** The crystalline polymer microporous membrane according to any one of claims 1 to 3, further comprising a first crosslinking agent, which assists the fluorosurfactant to crosslink.

**5.** The crystalline polymer microporous membrane according to claim 4, wherein the first crosslinking agent is a polyfunctional epoxy compound having two or more functional groups per molecule.

**6.** The crystalline polymer microporous membrane according to any of claim 4 or 5, further comprising a second crosslinking agent, which assists the first crosslinking agent to crosslink.

**7.** The crystalline polymer microporous membrane according to any one of claims 1 to 6, wherein the crystalline polymer microporous membrane satisfies $(d_3'/d_4')/(d_3/d_4) > 1$, where $d_3$ and $d_4$ respectively denote the average pore diameter of a first surface of the crystalline polymer microporous film before at least part of the exposed surface thereof is covered with the fluorosurfactant, and the average pore diameter of a second surface of the crystalline polymer microporous film before being covered with the fluorosurfactant, $d_3'$ and $d_4'$ respectively denote the average pore diameter of the first surface of the crystalline polymer microporous membrane and the average pore diameter of the second surface of the crystalline polymer microporous membrane, $d_3/d_4$ expresses a ratio of $d_3$ to $d_4$, $d_3'/d_4'$ expresses a ratio of $d_3'$to $d_4'$, and the first and second surfaces of the crystalline polymer microporous film correspond to the first and second surfaces of the crystalline polymer microporous membrane, respectively.

**8.** The crystalline polymer microporous membrane according to any one of claims 1 to 7, wherein the crystalline polymer is polytetrafluoroethylene.

**9.** A method for producing a crystalline polymer microporous membrane, comprising:

heating one surface of a film containing a crystalline polymer so as to form a semi-baked film with a temperature gradient in the thickness direction thereof;
drawing the semi-baked film; and
applying a fluorosurfactant to an exposed surface of the drawn film so as to cover the exposed surface of the drawn film with the fluorosurfactant.

**10.** The method for producing a crystalline polymer microporous membrane according to claim 9, wherein the fluorosurfactant contains at least one functional group selected from the group consisting of a hydroxyl group, an amino group, and derivative groups thereof.

**11.** The method for producing a crystalline polymer microporous membrane according to claim 10, wherein the fluorosurfactant contains the functional group as a substituent, and a rate of functional group substitution in a molecule of the fluorosurfactant is 15% to 90%.

**12.** The method for producing a crystalline polymer microporous membrane according to any one of claims 9 to 11, wherein the applying further contains crosslinking the fluorosurfactant with assistance of a first crosslinking agent.

**13.** The method for producing a crystalline polymer microporous membrane according to claim 12, wherein the first crosslinking agent is a polyfunctional epoxy compound having two or more functional groups per molecule.

**14.** The method for producing a crystalline polymer microporous membrane according to any of claim 12 or 13, the applying further contains crosslinking the first crosslinking agent with assistance of a second crosslinking agent.

**15.** A filtration filter, comprising:

the crystalline polymer microporous membrane as defined in any one of claims 1 to 8.

FIG. 1

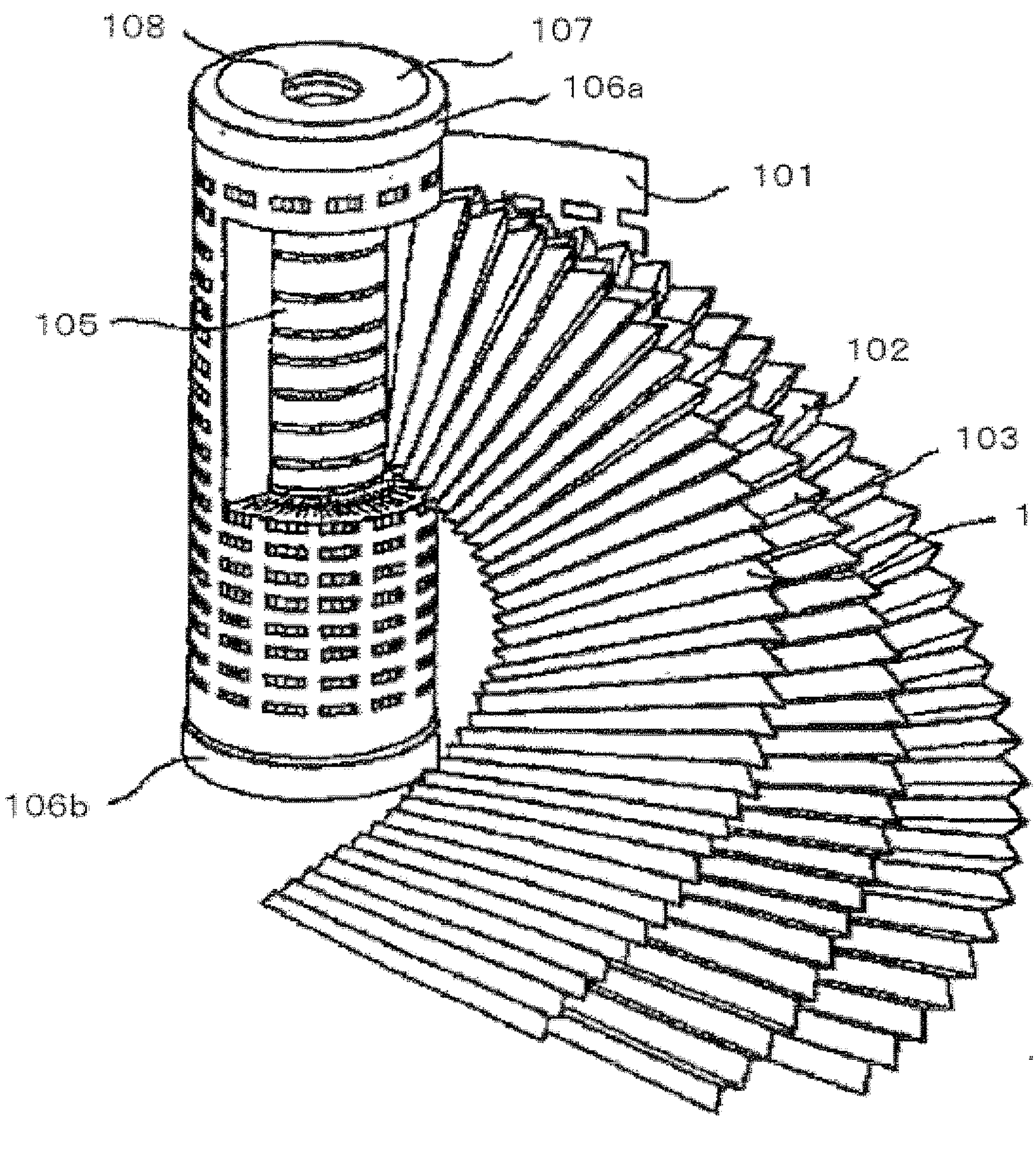

FIG. 2

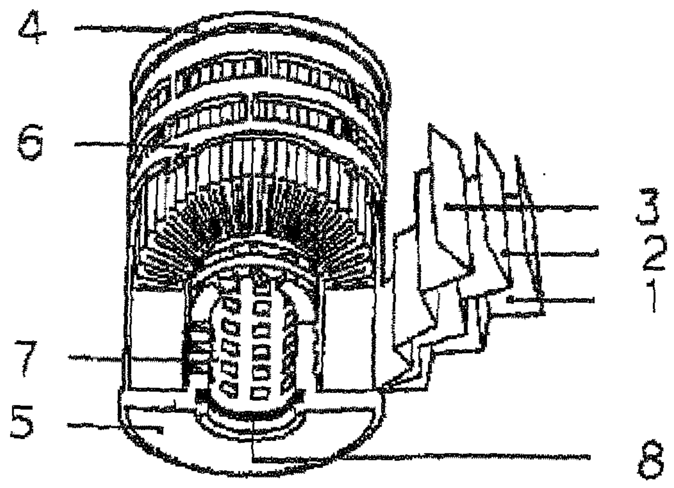


FIG. 3

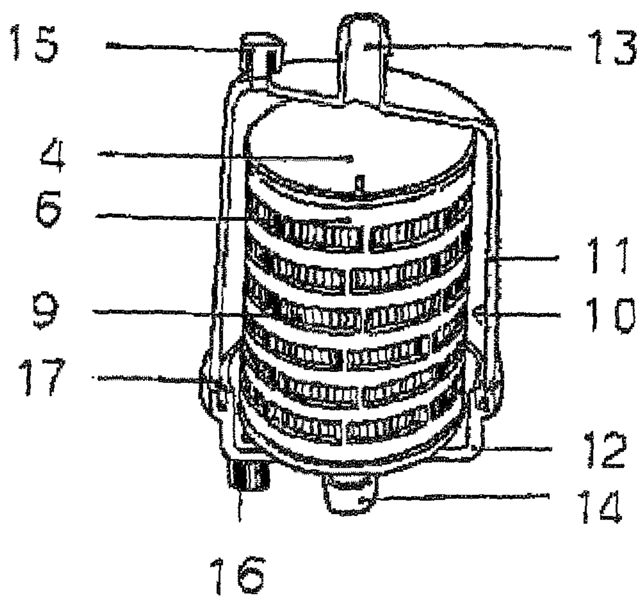

FIG. 4A

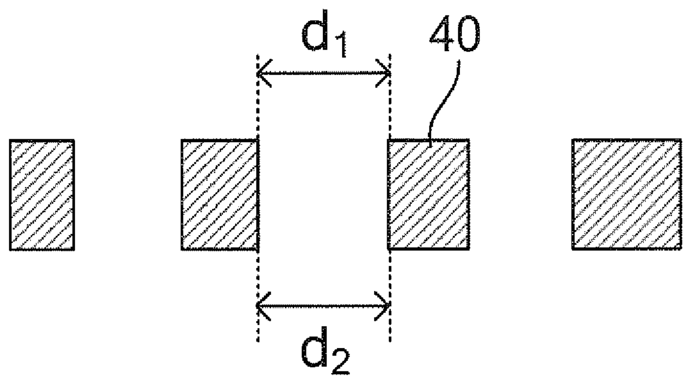


FIG. 4B

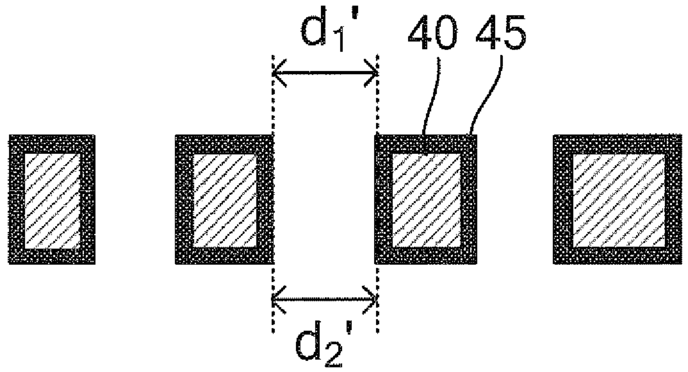

FIG. 5A

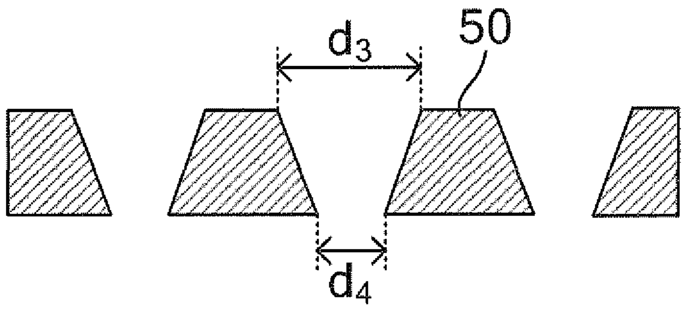


FIG. 5B

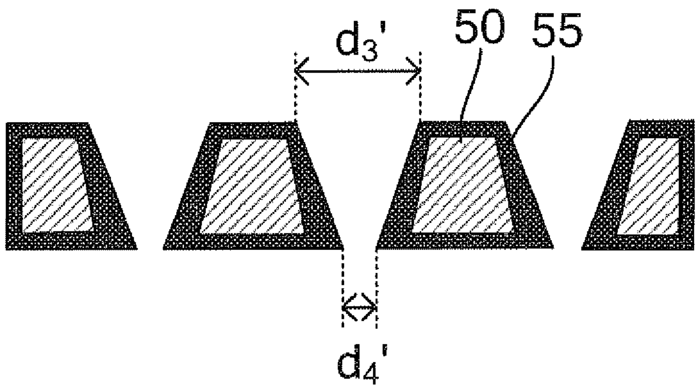

Europäisches Patentamt
European Patent Office
Office européen des brevets

# EUROPEAN SEARCH REPORT

Application Number
EP 10 18 3606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>Y | JP 6 228359 A (NITTO DENKO CORP) 16 August 1994 (1994-08-16)<br>* paragraphs [0022] - [2420] *<br>* abstract * | 1-6,8,14<br>7,9-14 | INV.<br>B01D69/12<br>B01D71/36<br>B01D67/00 |
| X<br>Y | US 2005/191426 A1 (MOYA WILSON [US]) 1 September 2005 (2005-09-01)<br>* paragraph [0044]; example 4 * | 1-6<br>7,9-14 | |
| X<br>Y | WO 2008/143516 A1 (FUJIFILM MFG EUROPE BV [NL]; ITAMI YUJIRO [NL]; KASE AKIRA [NL]) 27 November 2008 (2008-11-27)<br>* example 15 * | 1-6<br>7,9-14 | |
| X<br>Y | JP 61 249503 A (SUMITOMO ELECTRIC INDUSTRIES) 6 November 1986 (1986-11-06)<br>* abstract * | 1-3,8<br>9 | |
| X<br>Y | US 5 209 850 A (ABAYASEKARA DILIP R [US] ET AL) 11 May 1993 (1993-05-11)<br>* examples 1-3 * | 1-3,8<br>9 | TECHNICAL FIELDS SEARCHED (IPC) |
| X<br>Y | US 5 460 872 A (WU HUEY S [US] ET AL) 24 October 1995 (1995-10-24)<br>* examples D, 2 * | 1-3,8<br>9 | B01D |
| X<br>Y | WO 2009/085900 A1 (DU PONT [US]; ROELOFS MARK GERRIT [US]; TEASLEY MARK F [US]) 9 July 2009 (2009-07-09)<br>* example 8 * | 1-3,8<br>9 | |
| Y | EP 2 060 317 A1 (FUJIFILM CORP [JP]) 20 May 2009 (2009-05-20)<br>* paragraph [0039]; claims 1-15 * | 7,9-14 | |
| Y,D | EP 2 022 556 A1 (FUJIFILM CORP [JP]) 11 February 2009 (2009-02-11)<br>* paragraph [0009]; claims 9-25 * | 7,9-14 | |

The present search report has been drawn up for all claims

1

| Place of search | Date of completion of the search | Examiner |
|---|---|---|
| Munich | 14 December 2010 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 18 3606

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2010

| Patent document cited in search report | Publication date | Patent family member(s) | Publication date |
|---|---|---|---|
| JP 6228359 A | 16-08-1994 | JP 3254028 B2 | 04-02-2002 |
| US 2005191426 A1 | 01-09-2005 | NONE | |
| WO 2008143516 A1 | 27-11-2008 | CN 101754794 A | 23-06-2010 |
| | | EP 2148735 A1 | 03-02-2010 |
| | | JP 2010527766 T | 19-08-2010 |
| | | KR 20100019532 A | 18-02-2010 |
| | | US 2010126352 A1 | 27-05-2010 |
| JP 61249503 A | 06-11-1986 | JP 5021010 B | 23-03-1993 |
| US 5209850 A | 11-05-1993 | DE 69211020 D1 | 27-06-1996 |
| | | DE 69211020 T2 | 02-10-1996 |
| | | EP 0646043 A1 | 05-04-1995 |
| | | JP 3184531 B2 | 09-07-2001 |
| | | JP 7508214 T | 14-09-1995 |
| | | WO 9400221 A1 | 06-01-1994 |
| US 5460872 A | 24-10-1995 | NONE | |
| WO 2009085900 A1 | 09-07-2009 | EP 2220038 A1 | 25-08-2010 |
| EP 2060317 A1 | 20-05-2009 | CN 101433806 A | 20-05-2009 |
| | | JP 2009119412 A | 04-06-2009 |
| | | KR 20090050975 A | 20-05-2009 |
| | | US 2009127187 A1 | 21-05-2009 |
| EP 2022556 A1 | 11-02-2009 | JP 2007332342 A | 27-12-2007 |
| | | WO 2007135994 A1 | 29-11-2007 |
| | | KR 20090013190 A | 04-02-2009 |
| | | US 2009159526 A1 | 25-06-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 1421341 A
- US 2783894 A
- US 4196070 A
- DE 3003400
- JP 2007332342 A
- JP 2009119412 A
- JP 6228359 A
- JP 8283447 A
- JP 3075421 B


### Non-patent literature cited in the description


- **S. M. Heilmann et al.** *J. Fluorine Chem,* 1992, vol. 59, 387-396
- **Erik Kissa.** Fluorinated surfactant and repellents. MARCEL DEKKER, INC, 64-69
- Polyflon Handbook. DAIKIN INDUSTRIES, LTD, 1983
- Infrared Ray in Practical Use. Ningentorekishisha, 1992